# EUROPÄISCHE PATENTSCHRIFT

(11) **EP 0 450 282 B1**
(45) Veröffentlichungstag und Bekanntmachung des Hinweises auf die Patenterteilung: **30.03.1994**
(21) Anmeldenummer: 91101746.5
(22) Anmeldetag: 08.02.1991
(51) Int. Cl.: F16H 47/04, F16H 61/00

(54) **Antriebseinrichtung eines Fahrzeugs**
Vehicle drive system
Système d'entraînement d'un véhicule

(30) Priorität: 04.04.1990 DE 4010919
(43) Veröffentlichungstag der Anmeldung: 09.10.1991
(73) Patentinhaber: MAN Nutzfahrzeuge Aktiengesellschaft, 80976 München (DE)
(72) Erfinder: Hagin, Faust, Dipl.-Ing., W-8000 München 2 (DE); Drewitz, Hans, Ing. grad., W-8000 München 40 (DE)

(56) Entgegenhaltungen:
- DE-A- 2 904 572
- DE-A- 3 821 290
- US-A- 3 398 605
- US-A- 4 354 400

## Beschreibung

Die Erfindung betrifft eine Antriebseinrichtung eines Fahrzeugs.

Ausgangspunkt für die Überlegungen zur Schaffung der erfindungsgemäßen Lösung war ein Kraftfahrzeug, insbesondere Personenkraftwagen, der gehobenen Klasse mit einem Antriebsmotor, dessen Leistung von etwa 200 KW über ein Automatikgetriebe mit hydrodynamischem Wandler an den Achsantriebsstrang übertragen wird. Solche Automatikgetriebe haben gegenüber herkömmlichen Gangschaltgetrieben bekannte Nachteile. Sie haben einen schlechteren Wirkungsgrad hervorgerufen durch Schleppverluste im Bereich des hydrodynamischen Wandlers und den vorhandenen Lamellenkupplungen; sie bewirken ferner zeitmäßig längere und stärkere Drehzahleinschnitte im Antriebsmotor sowie eine Umwandlung eines Teils dessen kinetischer Energie in Kupplungsreibbarkeit beim Schalten mit der Folge vergleichsweise schlechter Beschleunigungswerte und hohem Kraftstoffverbrauch. Es sollten aus diesen Gründen Untersuchungen vorgenommen werden, wie bei Fahrzeugen dieser Leistungsklasse mit einem anderen Getriebekonzept die Nachteile eines Automatikgetriebes eliminiert, gleichzeitig aber mindestens der selbe Antriebsstrangkomfort und zumindest gleich gute Beschleunigungswerte sichergestellt werden können, wie mit einem herkömmlichen, von Hand optimal geschalteten Schaltgetriebe. Insbesondere eine Verkürzung der Drehzahleinschnitte im Motor beim Gang- bzw. Übersetzungswechsel im Sinne einer Verbesserung der Beschleunigungswerte und eine Verminderung des Kraftstoffverbrauches hatten Priorität.

In diese Untersuchungen wurden Erfahrungen mit einem in Stadtlinienbussen erfolgreich erprobten Getriebe gemäß DE-C-29 04 572 ebenso einbezogen wie bislang noch nicht gebaute, aber fertig konzipierte und hinsichtlich ihrer Wirkungsweise und Vorteile bekannte alternative Getriebe entsprechend der DE-A-38 21 290.Die best-mode-Lösung, die dort in Fig. 3 dargestellt ist, zeigt die Merkmale des Oberbegriffes des Anspruchs 1. Es handelt sich dabei um ein stufenloses hydrostatisch-mechanisches Leistungsverzweigungsgetriebe mit einem mindestens vierwelligen Planetendifferential und mindestens zwei Hydromaschinen, die verstellbar und als Motor oder Pumpe betreibbar sind. Dieses sogenannte SHL-Getriebe ist für einen extremen Overdrive-Betrieb mit einem Drehzahlverhältnis n₂/n₁ zwischen eingangsseitiger und ausgangsseitiger Hauptwelle > 1,5 ausgelegt, wobei für die Umschaltung der Hydromaschinen wärend des Betriebes auf verschiedene Wellen fünf schaltbare Kupplungen vorgesehen sind. Prinzipbedingt, das heißt, aufgrund des nur hydromechanisch vorgesehenen Betriebes sind die dort verwendeten Hydromaschinen auf eine Eck-Leistung ausgelegt, die etwa 50 % höher als die Leistung des Antriebsmotors ist.

Solche großdimensionierten Hydromaschinen sind relativ teuer, insbesondere wenn die Leckverluste minimiert sein sollen, und haben aufgrund ihrer großen Leistung auch eine bestimmte Baugröße, die mit Schwierigkeiten bei der Unterbringung und Anordnung in Bezug auf den mechanischen Teil des Getriebes insbesondere bei Einbau in einem Personenkraftwagen verbunden sein können. Außerdem verursachen solch leistungsstarke Hydromaschinen je nach Betriebszustand mehr oder weniger starke Geräusche, die beim Einsatz in einem Personenkraftwagen nicht akzeptiert werden können. Ferner fällt insbesondere im Overdrive-Betrieb eine gewisse hydrostatische Blindleistung an, die an sich unerwünscht ist.

Im Hinblick auf das Ziel, ein hydrodynamisches Automatikgetriebe durch eine bessere Alternative zu ersetzen, stellten sich daher folgende Forderungen:
1. Es sollte ein Betrieb unter Motor-Vollast für zügige Beschleunigung des Fahrzeugs weitestgehend ohne hydrostatische Geräusche möglich sein.
2. Es sollten möglichst kleine, jedenfalls kleinere Hydromaschinen als bei dem bekannten SHL-Getriebe mit wesentlich niederer hydrostatischer Leistung verwendet werden.
3. Der hydrostatische Blindleistungsanteil sollte möglichst in allen Betriebsbereichen elimimierbar sein.
4. Es sollte bei der Schaltung bzw. beim Übersetzungswechsel eine Minderung der Verluste an kinetischer Energie des Antriebsmotors im Hinblick auf wesentlich bessere Beschleunigungs- und Verbrauchswerte des Fahrzeugs im Vergleich zu einem solchen mit Automatikgetriebe erzielbar sein.
5. Es sollte ein Notfahrbetrieb bei Ausfall der Hochdruckhydraulik ohne Einflußnahme der Hydromaschinen auf den mechanischen Teil des Getriebes möglich sein.
6. Schließlich sollte ein exakt dosierbarer und hochwirksamer Retarder-Betrieb bis Fahrzeug-Stillstand möglich sein.

Diese Forderungen werden erfindungsgemäß durch eine Antriebseinrichtung mit den im Anspruch 1 angegebenen Merkmalen erfüllt.

Einzelheiten und Weiterbildungen dieses Antriebskonzeptes sind in den Unteransprüchen angegeben.

Das erfindungsgemäße Antriebskonzept mit der Möglichkeit sowohl eines stufenlosen Betriebes als auch eines mechanichen Mehrgangbetriebes verknüpft die vorteilhaften Eigenschaften einer Kraftstoffverbrauchs- und Abgasemissions-Reduzierung, eines höheren Beschleunigungsvermögens des Fahrzeugs beim stufenlosen Betrieb, weniger Geräuschentwicklung unter Vollastbedingungen beim Mehrgangbetrieb verbunden mit weiteren Vorteilen, wie
- Entfall der hydrostatischen Blindleistung im letzten Bereich,
- Erweiterung des Overdrive-Bereiches um ein erhebliches Maß, etwa 50 %,
- Reduzierung der installierten hydrostatischen Leistung um ein erhebliches Maß, etwa 1/3,
- erhöhte Leistungsverfügbarkeit, und
- kürzere Schaltvorgänge.

Weitere Vorteile ergeben sich auch aus der Figurenbeschreibung.

Nachstehend ist die erfindungsgemäße Antriebseinrichtung beispielhaft anhand der Zeichnung näher erläutert. In der Zeichnung zeigen:
- Fig. 1: eine Ausführungsform der erfindungsgemäßen Antriebseinrichtung, weitgehend schematisiert,
- Fig. 2: ein Diagramm, aus dem die Verhältnisse beim Betrieb der erfindungsgemäßen Antriebseinrichtung hinsichtlich Drehzahlen, Leistung und Geschwindigkeiten beim stufenlosen Betrieb und im Lastschalt-Viergang-Betrieb des SHL-Getriebes ersichtlich sind, und
- Fig. 3: eine tabellarische Aufstellung und Zusammenfassung beim Betrieb der erfindungsgemäßen Antriebseinrichtung, wobei die jeweiligen Verhältnisse von den Bereichsangaben in der ersten Zeile jeweils senkrecht nach unten in die jeweiligen Querspalten hinein herunterzuloten sind.

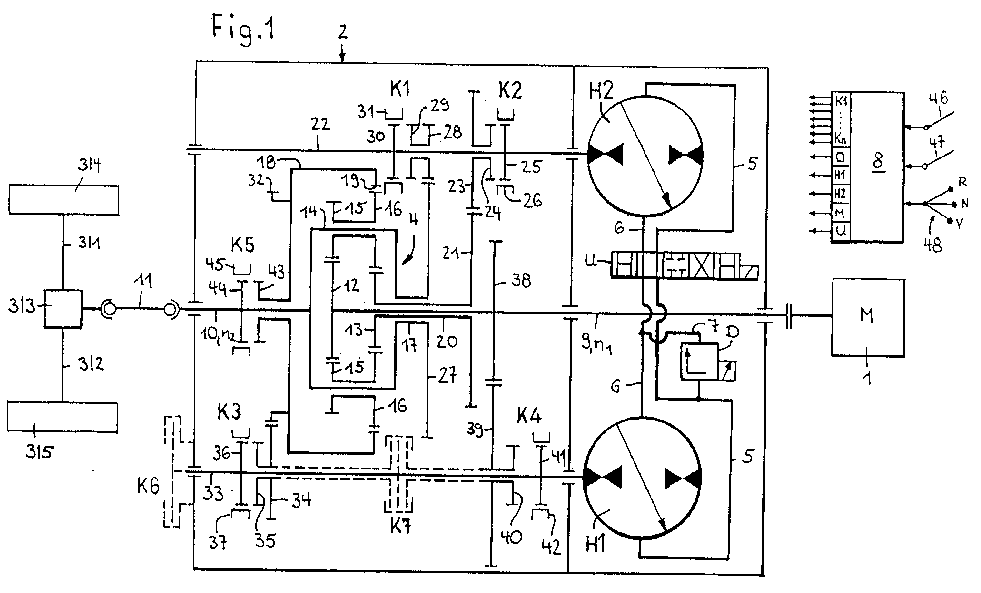

Gemäß Fig. 1 umfaßt die Antriebseinrichtung eines Fahrzeuges, beispielsweise eines Personenkraftwagens der gehobenen Hubraumklasse einen beispielsweise auf eine Leistung von 200 KW ausgelegten Antriebsmotor 1 und ein nachfolgend SHL-Getriebe genanntes, stufenloses hydrostatisch-mechanisches Leistungsverzweigungsgetriebes 2 zum Antrieb der über Achsantriebswellen 3/1, 3/2 mit einem Ausgleichsgetriebe 3/3 verbundenen Räder 3/4, 3/5.

Das SHL-Getriebe 2 weist als mechanischen Teil ein Planetendifferential 4 und als hydrostatischen Teil wenigstens zwei Hydromaschinen H1, H2 auf, die jeweils verstellbar sowie in beiden Richtungen als Motor oder Pumpe betreibbar sind und über einen elektrohydraulischen Umsteuerblock U führende hydraulische Leitungen 5, 6 miteinander kommunizieren können. Die beiden Leitungen 5, 6 sind über wenigstens eine Leitung 7 mit darin gegebenem Druckbegrenzungsventil D miteinander verbunden. Letzteres dient zur Begrenzung des verfügbaren hydrostatischen Druckes. Umsteuerblock U und Druckbegrenzungsventil D sind ebenso wie die Schwenkwinkelverstellung der Hydromaschinen H1, H2, die Regelung und Steuerung des Betriebes des Antriebsmotors 1 und nachfolgend noch näher zu erläuternde Kupplungen K1 - Kₙ durch von einer elektronischen Steuereinrichtung 8 ausgegebene Stell- bzw. Regel- bzw. Steuerbefehle steuerbar. Jede der beiden Hydromaschienen H1, H2 ist auf eine Leistung ausgelegt, die etwa 50 % oder weniger als jene des Antriebsmotors 1 beträgt.

Mit 9 ist die eingangsseitige, an der Kurbelwelle des Antriebsmotor 1 direkt oder indirekt angekuppelte Hauptwelle und mit 10 die ausgangsseitige Hauptwelle des SHL-Getriebes 2 bezeichnet, welche letztere über eine Verbindungswelle 11 mit dem Ausgleichsgetriebe 3/3 verbunden ist.

Das Planetendifferential 4 umfaßt im dargestellten Ausführungsbeispiel ein fest mit der eingangsseitigen Hauptwelle 9 verbundenes großes Sonnenrad 12, ein kleines Sonnenrad 13, mehrere jeweils auf einem fest mit der ausgangsseitigen Hauptwelle 10 verbundenen Steg 14 drehbar gelagerte Doppelplanetenräder 15, 16, eine mit dem Steg 14 koaxial fest verbundene Hohlwelle 17 sowie ein Hohlrad 8. Letzteres besitzt eine Innenverzahnung 19, mit der die Verzahnungen der Planetenräder 16 kämmen. Das kleine Sonnenrad 13 ist drehfest an einer Hohlwelle 20 angeorndet, die auf der eingangsseitigen Hauptwelle 9 gelagert ist, außerdem ein Zahnrad 21 trägt und die Hohlwelle 17 lagert.

An der Hohlwelle 17 ist drehfest ein Zahnrad 27 angeordnet, das mit einem drehbar, aber axial gesichert auf einer ersten, mit der Hydromaschine H2 antriebsmäßig verbundenen Nebenwelle 22 gelagerten Zahnrad 28 kämmt. Letzteres ist über die Teile 29, 30, 31 einer ersten schaltbaren Kupplung K1 mit der Nebenwelle 22 in bzw. außer Antriebsverbindung bringbar. Bei geschlossener Kupplung K 1 ist somit die zweite Hydromaschine H2 über eine erste Getriebeübersetzung, gebildet durch die Teile 28, 27, 17, 14, mit der ausgangsseitigen Hauptwelle 10 verbunden.

Das auf der Hohlwelle 20 sitzende Zahnrad 21 kämmt mit einem drehbar, aber axial gesichert ebenfalls auf der Nebenwelle 22 sitzenden Zahnrad 23. Letzteres ist über die Teile 24, 25, 26 einer zweiten schaltbaren Kupplung K2 mit der Nebenwelle 22 in bzw. außer Antriebsverbindung bringbar. Bei geschlossener Kupplung K2 ist die zweite Hydromaschine H2 somit über eine zweite Getriebeübersetzung, gebildet durch die Teile 23, 21, 20, mit dem kleinen Sonnenrad 13 verbunden.

Am Hohlrad 18 ist stirnseitig ein Zahnrad 32 gegeben, mit dem ein drehbar, aber axial gesichert auf einer zweiten Nebenwelle 33 gelagertes Zahnrad 34 kämmt. Die Nebenwelle 33 ist antriebsmäßig mit der Hydromaschine H1 verbunden. Das Zahnrad 34 ist über die Teile 35, 36, 37 einer dritten schaltbaren Kupplung K3 mit der Nebenwelle 33 in bzw. außer Antriebsverbindung bringbar. Bei geschlossener Kupplung K3 bewirkt die Hydromaschine H1 durch ihre Drehzahl und Drehrichtung die Drehzahl und Drehrichtung des Hohlrades 18. Die Drehzahl der ausgangsseitigen Hauptwelle 10 sumiert sich grundsätzlich aus den Drehzahlen des großen Sonnenrades 12 und des Hohlrades 18, welche wiederum die Umlaufgeschwindigkeit der Planetenräder 15 bzw. des Steges 14 festlegen.

Ferner ist auf der eingangsseitigen Hauptwelle 9 ein fest an dieser sitzendes Zahnrad 38 gegeben, das mit einem drehbar, aber axial gesichert auf der zweiten Nebenwelle 33 gelagerten Zahnrad 39 kämmt. Letzteres ist durch die Teile 40, 41, 42 einer vierten schaltbaren Kupplung K4 mit der Nebenwelle 33 in bzw. außer Wirkverbindung bringbar. Bei geschlossener Kupplung K4 ist somit die Hydromaschine H1 über einen Getriebezug 39, 38 mit der eingangsseitigen Hauptwelle 9 verbunden, was einen extremen Overdrive-Betrieb der Antriebseinrichtung ermöglicht.

Darüber hinaus ist das Hohlrad 18 durch die Teile 43, 44, 45 einer fünften schaltbaren Kupplung K5 mit der abtriebsseitigen Hauptwelle 10 in bzw. außer Wirkverbindung bringbar. Bei geschlossener Kupplung K5 ist somit Synchrondrehzahl zwischen Hohlrad 18 und ausgangsseitiger Hauptwelle 10 gegeben, welcher Zustand ebenfalls im Overdrive-Bereich herbeigeführt wird.

Es sei an dieser Stelle darauf hingeweisen, daß das SHL-Getriebe 2 auch einen anderen Aufbau als den in Fig. 1 dargestellten haben kann. Maßgebend ist nur, daß
- mittels der Kupplung (K1) eine Verbindung zwischen Hydromaschine (H2) und ausgangsseitiger Hauptwelle (10),
- mittels der Kupplung (K2) eine Verbindung zwischen Hydromaschine (H2) und kleinem Sonnenrad (13),
- mittels der Kupplung (K3) eine Verbindung zwischen Hydromaschine (H1) und dem Hohlrad (18),
- mittels der Kupplung (K4) eine Verbindung zwischen Hydromaschine (H2) und eingangsseitger Hauptwelle (9), sowie
- mittels der Kupplung (K5) eine Verblockung des Planetendifferentials (4)

herstellbar bzw. wieder auflösbar ist.

Denkbar ist auch eine Zusammenfassung der Kupplungen (K1, K2) zu einer räumlich kleiner bauenden Wechselschaltkupplung. Außerdem kann gegebenenfalls auch auf eine der beiden Nebenwellen verzichtet werden, je nach Anordnung der Hydromaschinen (H1, H2) am Gehäuse des mechanischen Teils des SHL-Getriebes 2.

Die Einflußnahme auf die Betätigungseinrichtung der Komponenten K1, K2, K3, K4, K5, H1, H2, D, U des SHL-Getriebes 2 und Komponenten des Antriebsmotors 1, wie Einspritzpumpe, Drosselklappen und dergleichen, erfolgt durch die elektronische Steuereinrichtung 8, und zwar auf der Basis von Signalen, die der Fahrer mit dem Fahrpedal 46, dem Bremspedal 47 und einem Wählhebel 48 für Vorwärts- bzw. Rückwärtsfahrt, Leerlaufstellung und Notfahrprogramm initiiert, sowie auf der Basis steuereinrichtungsintern abgespeicherter Betriebsdaten. Aus diesen Bezugssignalen und Betriebsdaten werden per abgespeichertem Programm mittels eines Mikroprozessors die nötigen Maßnahmen errechnet und dann von der Steuereinrichtung in Form entsprechender Schalt- bzw. Steuer- bzw. Regelbefehle an die angeschlossenen Komponenten der Antriebseinrichtung ausgegeben.

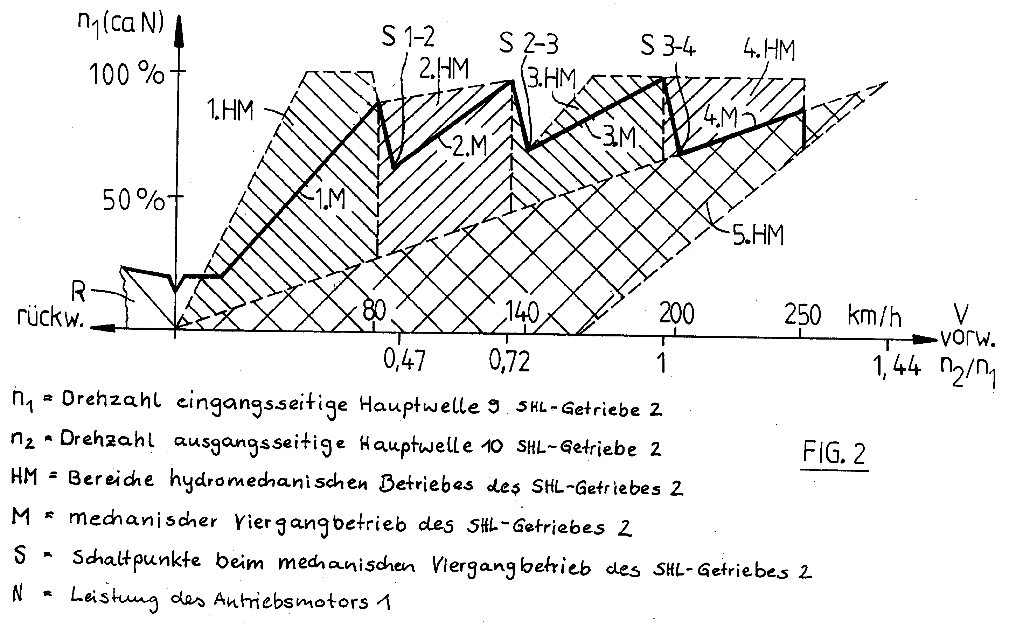

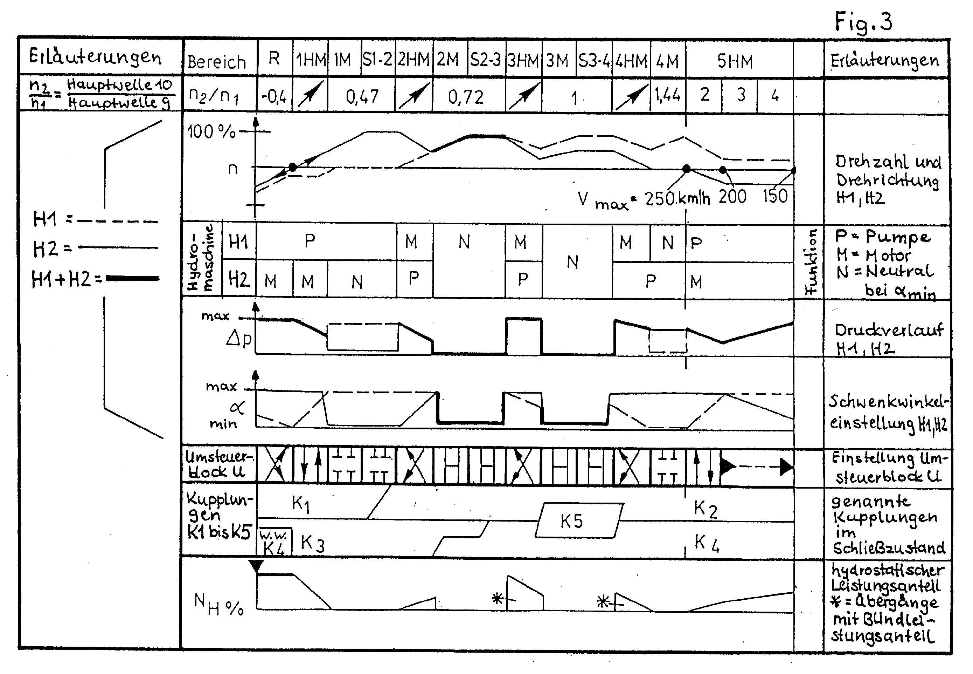

Mit einer derartigen Konfiguration des SHL-Getriebes 2 ist entweder eine stufenlose hydromechanische Kraftübertragung in fünf Betriebsbereichen bis in einen extremen Overdrive-Bereich hinein oder ein rein mechanischer Lastschalt-Viergang-Betrieb möglich. Diese Betriebsweisen sind nachstehend unter Zuhilfenahme der Darstellungen in Fig. 2 und 3 näher erläutert.

In Fig. 2 sind die Bereiche der stufenlosen hydromechanischen Kraftübertragung schraffiert markiert. Dabei werden diese Gegebenheiten durch die Angaben in der Tabelle gemäß Fig. 3, in der die jeweiligen Relationen spaltenweise von oben nach unten herunterzuloten sind, ergänzt. Dabei bedeuten:
- 1.HM =: erster hydromechanischer Bereich mit n₂/n₁ ≦ ca. 0,5; Verhältnisse:
a) Hydromaschine H1 wirkt rückwärts drehend als Pumpe und Hydromaschine H2 wirkt vorwärts drehend als Motor, Drehzahlverläufe n_{H1}, n_{H2} siehe Diagramme in Fig. 3;
b) Kupplungen K1, K3 geschlossen, K2, K4, K5 offen, siehe Fig. 3,daher Hydromaschine H1 mit Hohlrad 18, Hydromaschine H2 über Steg 14 mit abtriebseitiger Hauptwelle 10 verbunden;
c) Druckverläufe ΔP _{H1}, ΔP_{H2} und Schwenkwinkeleinstellungen α _{H1}, α H₂ siehe Diagramme in Fig. 3;
d) Einstellung Umsteuerblock U siehe Fig. 3, daher beide Leitungen 5, 6 auf prallelen Durchlaß geschaltet;
e) hydrostatischer Leistungsanteil N_{H} von H₁ und _{H2} siehe Diagramm in Fig. 3.
- 2.HM =: zweiter hydromechanischer Bereich mit n₂/n₁ ca. 0,5≦ca. 0,8; Verhältnisse:
a) Hydromaschine H1 wirkt vorwärts drehend als Motor und Hydromaschine H2 wirkt vorwärts drehend als Pumpe, Drehzahlverläufe n_{H1}, n_{H2} siehe Diagramme in Fig. 3;
b) Kupplungen K2, K3 geschlossen, K1, K4, K5 offen, siehe Fig. 3, daher Hydromaschine H1 mit Hohlrad 18 und Hydromaschine H2 mit kleinem Sonnenrad 13 verbunden;
c) Druckverläufe ΔP_{H1}, ΔP_{H2} und Schwenkwinkeleinstellungend α _{H1}, α _{H2} siehe Diagramme in Fig. 3;
d) Einstellung Umsteuerblock U siehe Fig. 3, daher beide Leitungen 5, 6 kreuzweise auf Durchlaß geschaltet;
e) hydrostatischer Leistungsanteil N_{H} von H1 und H2 siehe Diagramm in Fig. 3.
Bemerkung: Die Umschaltung der Hydromaschine H2 aus der ursprünglichen abtriebsseitigen Verbindung im Bereich 1.HM findet bei einem Drehzahlverhältnis n₂/n₁ = ca. 0,47, bei Nullfördermenge H₂ und Synchrondrehzahl bei stillstehendem Hohlrad 18 durch Öffnen von Kupplung K1 und Schließen von Kupplung K2 statt.
- 3.HM =: dritter hydromechanischer Bereich mit n₂/n₁ = ca. 0,8 = ca. 1; Verhältnisse:
a) Hydromaschine H1 wirkt vorwärts drehend als Motor und Hydromaschine H2 vorwärts drehend als Pumpe, Drehzahlverhältnisse n_{H1}, n_{H2} siehe Diagramme in Fig. 3;
b) Kupplungen K2, K4 geschlossen, K1, K3, K5 offen, siehe Fig. 3, daher Hydromaschine H1 mit eingangsseitiger Hauptwelle 9 und Hydromaschine H2 mit kleinem Sonnenrad 13 verbunden;
c) Druckverläufe ΔP_{H1}, ΔP_{H2} und Schwenkwinkeleinstellungen, α _{H1}, α _{H2}, siehe Diagramme in Fig. 3;
d) Einstellung Umsteuerblock U siehe Fig. 3, dabei beide Leitungen 5, 6 kreuzweise auf Durchlaß geschaltet;
e) hydrostatischer Leistungsanteil N_{H} von H₁ und H₂ siehe Diagramm in Fig. 3.
Bemerkung: Die Umschaltung der Hydromaschine H₁ von ihrer vorherigen hohlradseitigen Verbindung im ersten (1.HM) und zweiten Bereich (2.HM), also vom Hohlrad 18 weg zur Abtriebsseite (kleines Sonnenrad 13), erfolgt bei einem Drehzahlverhältnis n₂/n₁ von ca. 0,72 zwar in voll ausgeschwenktem Zustand (α _{H1} = max), jedoch bei Synchrondrehzahl und ohne Wechsel zwischen Druck- und Saugseiten, das heißt mit sehr kurzen, ca. 0,4 sec. betragenden Drehzahl- und Druckangleichungen durch Öffnen der Kupplung K3 und Schließen der Kupplung K4. Da im Moment der Umschaltung auch die Hydromaschine H₂ voll ausgeschwenkt ist (α _{H2} = max), ergibt sich beim Übergang in den nächsten Zustand kurzfristig ein sehr hoher hydrostatischer Blindleistungsanteil, der im Diagramm von Fig. 3 mit einem Sternchen markiert ist. Daher ist dieser Bereich schnell zu durchfahren, bzw. durch den dritten mechanischen Gang (3.M) zu ersetzen.
- 4.HM =: vierter hydromechanischer Bereich (Overdrive-Bereich) mit n₂/n₁ = ca. 1 ≦ ca. 1,5; Verhältnisse:
a) Hydromaschine H1 wirkt vorwärts drehend als Motor und Hydromaschine H2 wirkt vorwärts drehend als Pumpe, Drehzahlverhältnisse n_{H1}, n_{H2} siehe Diagramme in Fig. 3;
b) Kupplungen K2, K4 geschlossen, K1, K3, K5 offen, siehe Fig. 3, daher Hydromaschine H1 mit eingangsseitiger Hauptwelle 9 und Hydromaschine H2 mit kleinem Sonnenrad 13 verbunden;
c) Druckverläufe ΔP_{H1}, ΔP_{H2} und Schwenkwinkeleinstellungen α _{H1},α _{H2} siehe Diagramme in Fig. 3;
d) Einstellung Umsteuerblock U siehe Fig. 3, daher beide Leitungen 5, 6 kreuzweise auf Durchlaß geschaltet;
e) hydrostatischer Leistungsanteil N_{H von H1 und H2} siehe Diagramm in Fig. 3.
- 5.HM =: fünfter hydromechanischer Bereich (extremer Overdrive-Bereich) mit n₂/n₁ ca. 1,5 ≦ ca. 4; Verhältnisse:
a) Hydromaschine H1 wirkt vorwärts drehend als Pumpe und Hydromaschine H2 wirkt rückwärts drehend als Motor, Drehzahlverhältnisse n_{H1}, n_{H2} siehe Diagramme in Fig. 3,
b) Kupplungen K2, K4 geschlossen, K1, K3, K5 offen, siehe Fig. 3, daher Hydromaschine H1 mit eingangsseitiger Hauptwelle 9 und Hydromaschine H2 mit kleinem Sonnenrad 13 verbunden;
c) Druckverläufe ΔP_{H1}, ΔP_{H2} und Schwenkwinkeleinstellungen α _{H1}, α _{H2} siehe Diagramme in Fig. 3;
d) Einstellung Umsteuerblock U siehe Fig. 3, daher beide Leitungen 5, 6 parallel auf Durchlaß geschaltet;
e) Hydrostatischer Leistungsanteil N_{H} von H1 und H2 siehe Diagramm in Fig. 3.
Bemerkung zum Betrieb in den Bereichen 1.HM bis 5.HM: Mit vorstehend dargestellter Betriebsweise läßt sich auf der Basis des angegebenen SHL-Getriebes 2 eine stufenlose hydrostatisch-mechanische Kraftübertragung bei einem Drehzahlverhältnis n₂/n₁ zwischen 0 und 4, das heißt auch im Overdrive-Bereich (n₂/n₁ =1 ≦ ca. 1,5) und extremen Overdrive-Bereich (n₂/n₁ ca. 1,5 ≦ ca. 4) mit geringem hydrostatischen Anteil an der gesamtübertragenen Leistung erreichen, wobei die hydrostatische Blindleistung außer im dritten Bereich (3.HM) verhältnismäßig klein bleibt bzw. gar nicht anfällt. Beim Anfahren (unter Inkaufnahme einer augenblicklichen Inanspruchnahme des Druckbegrenzungsventils D sogar vom Fahrzeugstillstand an) ergibt sich bei voll ausgeschwenkter Hydromaschine H₂ (α _{H2} = max) und in gleicher Richtung wirkenden Momentes der Hydromaschine H1 sowie des Antriebsmotors 1 ein Antriebsmoment, das etwa einer Vervierfachung des maximalen Momentes des Antriebsmotors 1 entspricht.
- R =: Rückwärtsfahrt in hydromechanischem Betrieb mit n₂/n₁ = 0 bis ca. - 0,5; Verhältnisse:
a) Hydromaschine H1 wirkt als Pumpe und Hydromaschine H2 wirkt rückwärts drehend als Motor, Drehzahlverhältnisse n_{H1}, n_{H2} siehe Diagramme in Fig. 3;
b) Kupplungen K1 und K3 oder wahlweise zu dieser K4 geschlossen, K2, K5 und K4 oder wahlweise zu dieser K3 offen, siehe Fig. 3 - daher Hydromaschine H1 entweder rückwärtsdrehend mit Hohlrad 18 oder wahlweise mit eingangsseitiger Hauptwelle 9 und Hydromaschine H2 über Steg 14 mit ausgangsseitiger Hauptwelle 10 verbunden;
c) Druckverläufe ΔP_{H1}, ΔP_{H2} und Schwenkwinkeleinstellungen, α _{H1}, α _{H2} siehe Diagramme in Fig. 3;
d) Einstellung Umsteuerblock U siehe Fig. 3, daher beide Leitungen 5, 6 kreuzweise auf Durchlaß geschaltet;
e) hydrostatischer Leistungsanteil N_{H} von H₁ und H₂ siehe Diagramm in Fig. 3.
Bemerkungen: Wenn für Rückwärtsfahrt die Philosophie des Schaukelns durch stufenlosen Übergang zwischen Vorwärts- und Rückwärtsfahrt ohne definierten Fahrzeug-Stillstand favorisiert wird, bleibt für Wechsel von Vorwärts- auf Rückwärtsfahrt die gleiche Anschlußkonfiguration (K1, K3 geschlossen) für die Hydromaschinen H1, H2 (H1 an 18, H2 über 14 an 10) wie vorher bei Vorwärtsfahrt erhalten.
Zur Erhöhung des Rückwärtsabtriebsmomentes kann beim Übergang in Rückwärtsfahrt die Kupplung K3 geöffnet und die Kupplung K4 geschlossen werden, verbunden mit einer entsprechenden Umschaltung des Umsteuerblockes U, wofür jedoch ein kurzzeitiger Fahrzeugstillstand erforderlich ist.

Nachstehend ist die Funktionsweise und Einflußnahme auf das SHL-Getriebe 2 für einen mechanischen Lastschalt-Viergang-Betrieb anhand der Figuren 2 und 3 erläutert.

Der erste und vierte Gang sind durch rein mechanischen Betrieb des SHL-Getriebes 2 erzielbar, wobei durch Unterbrechen der beiden Verbindungsleitungen 5, 6 infolge entsprechender Einstellung des Umsteuerblockes U (wie in Fig. 3 in Spalten 1.M, S1-2, 4.M durch entsprechende Symbole dargestellt) die voll ausgeschwenkte Hydromaschine H1 das Hohlrad 18 bzw. die Hydromaschine H2 das kleine Sonnenrad 13 geräusch- und verlustarm festhält, bei hierfür entsprechend notwendigen Öffnungs- und Schließzuständen der Kupplungen K1, K2, K3, K4, K5. Der zweite und dritte mechanische Gang werden im hydrostatischmechanischen Übergangs-Mischbetrieb des SHL-Getriebes 2 erzielt, wobei dies durch Durchschalten der beiden Verbindungsleitungen 5, 6 infolge entsprechender Einstellung des Umsteuerblockes U (wie in Fig. 3 in Spalten 2.M, S 2-3, 3.M und S 3-4 durch entsprechende Symbole dargestellt) sowie Herbeiführung notwendiger Öffnungs- und Schließzustände der Kupplungen K1, K2, K3, K4, K5 und notwendige Einflußnahmen auf die Hydromaschinen H1, H2 herbeigeführt wird.

Im einzelnen ergeben sich für einen zügigen Beschleunigungsvorgang aus Langsamfahrt oder Stillstand des Fahrzeugs bis zum Erreichen der Maximalgeschwindigkeit von beispielsweise 250 km/h folgende Verhältnisse:

### 1.M = erster mechanischer Gang:

Die Kupplungen K1, K3 sind von Anfang an geschlossen, K2, K4, K5 offen. Die hydraulischen Leitungen 5, 6 sind umsteuerblockseitig abgesperrt (siehe entsprechende Symbole in Fig. 3). Das Hohlrad 18 ist demzufolge mit der voll auf α ₘₐₓ ausgeschwenkten, als Pumpe betriebenen Hydromaschine H1, die abtriebsseitige Hauptwelle 10 dagegen mit der neutralisiert (α ₘᵢₙ) drehenden Hydromaschine H2 verbunden. Mit zunehmender Drehzahl des Antriebsmotors 1 wird im Bereich n₂/n₁ = ca. 0,2 ≦ 0,5 der Schaltpunkt S 1-2 (Übergang vom ersten in zweiten Gang) erreicht.

Das Umschalten in den zweiten Gang (2.M) erfolgt durch Öffnen von Kupplung K1 und Schließen von Kupplung K2. Die Kupplung K3 bleibt geschlossen, Kupplungen K4, K5 bleiben offen, die Leitungen 5, 6 bleiben umsteuerblockseitig abgesperrt (siehe Symbole Fig. 3). Die nun mit dem kleinen Sonnenrad 13 verbundene Hydromechanische H2 wird kurzzeitig (für ca. 0,4 sec.) voll auf α ₘₐₓ ausgeschwenkt, was einen Drehzahleinschnitt im Antriebsmotor 1 bewirkt, siehe den absteigenden Ast der Drehzahlkennlinie n₁ nach dem Schaltpunkt S 1-2 im Feld 2.HM in Fig. 2.

### 2.M = zweiter mechanischer Gang:

Das Ende des besagten Drehzahleinschnittes wird durch neutralisierende Einstellung (α ₘᵢₙ) der beiden Hydromaschinen H1, H2 und umsteuerblockseitiges Kurzschließen der Leitungen 5, 6 herbeigeführt. Dadurch ergibt sich Synchrondrehzahl im mechanischen Teil des SHL-Getriebes 2, das heißt, gleiche Umfangsgeschwindigkeiten der Komponenten. Sobald dieser Zustand erreicht ist, wird auch die Kupplung K4 geschlossen (die Kupplungen K2, K3 bleiben weiterhin geschlossen, K1, K5 weiterhin offen). Demzufolge ist die Hydromaschine H1 nunmehr auch mit der eingangsseitigen Hauptwelle 9 verbunden. Dadurch kann die Drehzahl des Antriebsmotors 1 rasch wieder auf Maximum ansteigen.

Zum Übergang vom zweiten in den dritten Gang etwa bei n₂/n₁ von ca. 0,7 erfolgt ein Öffnen der Kupplung K3. Die übrigen Kupplungen K1, K2, K4, K5 bleiben in der gegebenen Schaltposition. Nach diesem Öffnen von K3 werden die Hydromaschinen H1, H2 kurzzeitig (für ca. 0,4 sec.) auf α ₘₐₓ ausgeschwenkt, was wiederum einen Drehzahleinschnitt im Antriebsmotor 1 (siehe den absteigenden Ast der Drehzahl-Kennlinie n₁ im Feld 3.HM in Fig. 2) und innerhalb des mechanischen Teils des SHL-Getriebes 2 eine Synchronisierung der Komponenten im Sinne der Herbeiführung gleicher Winkelgeschwindigkeiten bewirkt. Wenn diese Synchronität erreicht ist, ist der Schaltpunkt S 2-3 gegeben, es erfolgt das Umschalten vom zweiten in den dritten Gang (3.M), was durch Schließen der Kupplung K5 bewirkt wird (Kupplungen K2, K4 bleiben zu, K1, K3 bleiben offen).

### 3.M = dritter mechanischer Gang:

Nach dem Schließen von Kupplung K5 ist das Planetendifferential 4 des SHL-Getriebes 2 verblockt. Infolge einer nun wiederum neutralisierten (α ₘᵢₙ) Einstellung der beiden Hydromaschinen H1, H2 kann dann die Drehzahl des Antriebsmotors 1 rasch wieder auf Maximum hochdrehen. In diesem Stadium werden die beiden Hydromaschinen H1, H2 wieder kurzzeitig (für ca. 0,4 sec.) voll auf α ₘₐₓ verschwenkt, was wiederum einen Drehzahleinschnitt im Antriebsmotor 1 bewirkt (siehe den absteigenden Ast der Drehzahl-Kennlinie im Feld 4.HM in Fig. 2).

In diesem Stadium ist der Schaltpunkt S 3-4 erreicht, das heißt, der Zeitpunkt des Umschaltens vom dritten in den vierten Gang (4.M). Dieses Umschalten erfolgt durch Öffnen der Kupplung K5 (Kupplungen K2, K4 bleiben zu, K1 und K3 bleiben offen) und durch umsteuerblockseitiges Absperren der Leitungen 5, 6 sowie durch neutralisierendes Einstellen der Hydromaschine H1 auf α ₘᵢₙ und Einstellen der als Pumpe zu betreibenden Hydromaschine H2 in Richtung α ₘₐₓ.

### 4.M = vierter mechanischer Gang:

Nach vorgenannten Umschaltvorgängen ist die Hydromaschine H1 wieder mit der eingangsseitigen Hauptwelle 9 und die Hydromaschine H2 mit dem kleinen Sonnenrad 13 verbunden, was bewirkt, daß die Drehzahl des Antriebsmotors 1 rasch wieder in Richtung Maximum hochdrehen kann. Am Ende des vierten Ganges ist die Maximalgeschwindigkeit des Fahrzeuges erreichbar.

Nach dieser Beschleunigungsphase kann für zügige Weiterfahrt in die Zustände des fünften hydrostatisch-mechanischen Bereiches 5.HM eingetreten werden, was einem extremen Overdrive-Betrieb bei niedriger Motordrehzahl in einem Verhältnis n₂/n₁ von ca. 1,5 ≦ 4 entspricht. Die diesbezüglichen Verhältnisse sind weiter vorn bereits beschrieben.

Es sei darauf hingewiesen, daß durch kurzfristiges partielles Lastwegnehmen beim Übergang zwischen zwei mechanischen Gängen, was von der Steuereinrichtung 8 durch entsprechende Einflußnahme auf die Einspritzpumpe und gegebenenfalls Drosselklappen des Antriebsmotors 1 bewirkt wird, sich auch bei Vollastbeschleunigung die Geräusche der beiden Hydromaschinen H1, H2 in vertretbarem Rahmen halten lassen.

Zur Erhöhung der Beschleunigung kann durch Einleiten einer Kick-down-Funktion, welche der Steuereinrichtung 8 durch vollständiges Niedertreten des Fahrpedals 46 von einem entsprechenden Sensor signalisiert wird, zumindest der erste mechanische Gang ausgeschaltet und bei Vollastbetrieb des Antriebsmotors 1 der erste hydromechanische Betriebsbereich (1.HM) durchfahren werden unter Inkaufnahme hydrostatischer Geräusche.

Beim Bremsen des Fahrzeugs erfolgt ein Pumpen der Hydromaschinen H1, H2 in sämtlichen Bereichen gegen das wenigstens eine Druckbegrenzungsventil D, wodurch eine besonders wirksame Retarderfunktion mit dem erfindungsgemäßen Antriebs-Konzept erreichbar ist.

Unter Anwendung einer in Fig. 1 gestrichelt eingezeichneten Reibkupplung K6 kann durch schleifende Einstellung von der Steuereinrichtung 8 her eine Abstützung der Hydromaschine H1 im Anfahrbereich und damit ein Notfahrbetrieb des Fahrzeugs in den ersten drei Gängen auch bei Ausfall der Hochdruckhydraulik erzielt werden.

Unter Anwendung der Reibkupplung K6 und eventuell einer weiteren in Fig. 1 gestrichelt eingezeichneten Lamellenkupplung 7 kann durch entsprechend schleifende Einstellung derselben durch Befehle von der Steuereinrichtung 8 her eine Lastsynchronisierung im Moment der Umschaltung der Hydromaschinen H1, H2 auf andere Getriebeteile bewirkt werden, so daß die Kupplungen K1, K2, K3, K4 anstelle durch Synchron-Klauenschaltkupplungen auch durch einfache Klauenkupplungen realisiert werden könnten.

## Patentansprüche

1. Antriebseinrichtung eines Fahrzeuges, mit einem zwischen Antriebsmotor (1) und Achsantriebsstrang (11) gegebenen hydrostatisch-mechanisches Leistungsverzweigungsgetriebe (2), das ein wenigstens vierwelliges Planetendifferential (4) mit mindestens zwei Reihen von Planetenrädern (15, 16), zwei Sonnenrädern (12, 13), einem Steg (14) und einem Hohlrad (18), ferner zwei den Eingang bzw. Ausgang bildende und jeweils an verschiedenen Wellen des Planetendifferentials (4) angeschlossene Hauptwellen (9, 10) und mindestens zwei Hydromaschinen (H1, H2) aufweist, die wechselweise als Motor oder Pumpe arbeiten und jeweils in verschiedenen Betriebsbereichen durch entsprechende Schaltung mehrerer Kupplungen (K1, K2, K3, K4) an einer Welle des Planetendifferentials (4) anschließbar sind, dadurch gekennzeichnet, daß das Leistungsverzweigungsgetriebe (2) sowohl eine stufenlose hydromechanische Kraftübertragung bis in einen extremen Overdrive-Bereich mit n₂/n₁ = 0 bis ca. 4 zwischen beiden Hauptwellen (9, 10) als auch einen Lastschalt-Viergang-Betrieb ermöglicht, bewirkt durch einen ersten hydromechanischen Anfahrbereich und einen letzten hydromechanischen Extrem-Overdrive-Bereich und zwischengeschalteten mechanischen Gang-Betrieb mit so abgestuften Schaltungen, daß mit kurzzeitigen Motordrehzahleinschnitten zumindest der größte Teil eines Fahrzeug-Beschleunigungsvorganges rein mechanisch abdeckbar ist, wobei der zweite mechanische Gang (2.M) durch gleichzeitige mechanische Verbindung einer Hydromaschine (H1) mit zwei der Wellen des Planetendifferentials (4) entsteht, der vorletzte mechanische Gang (3.M) durch Schalten einer Kupplung (K5) ein Direktgang ist und die letzte mechanische Stufe (4.M) durch hydrostatisches Festhalten eines Sonnenrades (13) mittels einer voll ausgeschwenkten Hydromaschine (H2) bewirkt wird.

2. Antriebseinrichtung nach Anspruch 1, dadurch gekennzeichnet, daß das Leistungsverzweigungsgetriebe (2) im einzelnen noch folgende Getriebeteile aufweist, nämlich
- einen mittels der schaltbaren Kupplung (K1) schließ- und unterbrechbaren Getriebezug (28, 27, 17, 14) zwischen Hydromaschine (H2) und ausgangsseitiger Hauptwelle (10),
- einen mittels der schaltbaren Kupplung (K2) schließ- und unterbrechbaren Getriebezug (23, 21, 20) zwischen Hydromaschine (H2) und dem kleineren (13) der beiden Sonnenräder (12, 13),
- einen mittels einer schaltbaren Kupplung (K3) schließ- und unterbrechbaren Getriebezug (34, 32) zwischen Hydromaschine (H1) und Hohlrad (18),
- einen mittels der schaltbaren Kupplung (K4) schließ- und unterbrechbaren Getriebezug (39, 38) zwischen Hydromaschine (H1) und eingangsseitiger Hauptwelle (9),
und daß mittels der schaltbaren Kupplung (K5) eine Verblockung des Planetendifferentials (4) erzielbar ist.

3. Antriebseinrichtung nach den Ansprüchen 1 und 2, dadurch gekennzeichnet, daß das Leistungsverzweigungsgetriebe (2) eine erste, mit der Hydromaschine (H2) verbundene Nebenwelle (22) und eine zweite, mit der Hydromaschine (H1) verbundene Nebenwelle (33) aufweist, wobei auf der ersten Nebenwelle (22) die Teile (29, 30, 31) einer ersten Kupplung (K1), mit der die Hydromaschine (H2) über einen Getriebezug (28, 27) und den Steg (14) mit der ausgangsseitigen Hauptwelle (10) verbindbar ist, und die Teile (24, 25, 26) einer zweiten Kupplung (K2), mit der die Hydromaschine (H2) mit dem kleineren (13) der beiden Sonnenräder (12, 13) über einen Getriebezug (23, 21) verbindbar ist, angeordnet sind, und wobei auf der zweiten Nebenwelle (33) die Teile (35, 36, 37) einer dritten Kupplung (K3), mit der die Hydromaschine (H1) über ein Zahnrad (34) mit dem Hohlrad (18) verbindbar ist, sowie die Teile (40, 41, 42) einer vierten Kupplung (K4), mit der die Hydromaschine (H1) über einen Getriebezug (39, 38) mit der eingangsseitigen Hauptwelle (9) verbindbar ist, angeordnet sind, und daß auf der ausgangsseitigen Hauptwelle (10) die Teile (43, 44, 45) einer fünften Kupplung (K5) angeordnet sind, mit der das Hohlrad (18) mit der ausgangsseitigen Hauptwelle (10) zur Verblockung des Planetendifferentialgetriebes (4) verbindbar ist.

4. Antriebseinrichtung nach Anspruch 1, dadurch gekennzeichnet, daß die beiden Hydromaschinen (H1, H2) mit ihren Anschlüssen über zwei hydraulische Leitungen (5, 6) miteinander in Verbindung stehen, die durch einen Umsteuerblock (U) auf parallelen oder kreuzweisen Durchlaß schaltbar, vollständig absperrbar oder kurzschließbar sind sowie über wenigstens eine Leitung (7) mit steuerbarem Druckbegrenzungsventil (D) verbunden sind.

5. Antriebseinrichtung nach einem der Ansprüche 1 bis 4, dadurch gekennzeichnet, daß der erste mechanische Gang (1.M) im Lastschalt-Viergang-Betrieb des Leistungsverzweigungsgetriebes (2) unter folgenden Bedingungen gegeben ist, nämlich die Kupplungen (K2, K4, K5) sind offen, die Kupplungen (K1, K3) sind geschlossen, die Verbindungsleitungen (5, 6) sind abgesperrt, demzufolge das Hohlrad (18) mit der voll auf α ₘₐₓ ausgeschwenkten, als Pumpe wirkenden Hydromaschine (H1) und die ausgangsseitige Hauptwelle (10) über den Steg (14) mit der neutralisierten, mit α ₘᵢₙ-Schwenkwinkel drehenden Hydromaschine (H2) verbunden ist, wobei mit zunehmender Drehzahl des Motors (1) im Bereich n₂/n₁ ca. 0,2 ≦ ca. 0,5 der Schaltpunkt (S1-2) für Übergang in den zweiten mechanischen Gang (2.M) erreicht wird.

6. Antriebseinrichtung nach den Ansprüchen 1 bis 5, dadurch gekennzeichnet, daß der zweite mechanische Gang (2.M) im Lastschalt-Viergang-Betrieb des Leistungsverzweigungsgetriebes (2) unter folgenden Bedingungen erreicht wird, nämlich die Kupplung (K1) geöffnet, Kupplung (K2) geschlossen wird, die Kupplung (K3) geschlossen, (K4 und K5) offen bleibt, ferner die Leitungen (5, 6) umsteuerblockseitig von ursprünglich parallel über vollgesperrt auf kreuzweisen Durchlaß geschaltet werden und die nun mit den kleinen Sonnenrad (13) verbundene Hydromaschine (H2) kurzzeitig voll auf α ₘₐₓ ausgeschwenkt wird, was einen Drehzahleinschnitt im Antriebsmotor (1) und Synchrondrehzahl im Planetendifferential (4) im Sinne gleicher Umfangsgeschwindigkeiten der Komponenten bewirkt und dann der zweite mechanische Gang (2.M) durch zusätzliches Schließen der Kupplung (K4) bewirkt wird - Kupplungen (K2, K3) bleiben weiterhin geschlossen, (K1, K5) weiterhin offen -, wodurch die Hydromaschine (H1) dann auch mit der eingangsseitigen Hauptwelle (9) verbunden ist und die Drehzahl des Antriebsmotors (1) wieder bis auf Maximum ansteigen kann, während dessen durch neutralisierende Einstellung der Hydromaschinen (H1, H2) auf α ₘᵢₙ und umsteuerblockseitiges Kurzschließen der beiden Leitungen (5, 6) Strömungsverluste vermieden werden.

7. Antriebseinrichtung nach den Ansprüchen 1 bis 6, dadurch gekennzeichnet, daß der Übergang vom zweiten in den dritten mechanischen Gang (3.M) im Lastschalt-Viergang-Betrieb des Leistungsverzweigungsgetriebes (2) etwa bei einem Drehzahlverhältnis n₂/n₁ = ca. 0,7 durch Öffnen der Kupplung (K3) erfolgt - die übrigen Kupplungen (K1, K2, K4, K5) bleiben in gegebenen Schaltposition -, gleichzeitig kurzzeitig die Hydromaschine (H1) in Richtung α ₘₐₓ und die Hydromaschine (H2) voll auf α ₘₐₓ ausgeschwenkt werden, was wieder einen Drehzahleinschnitt im Antriebsmotor (1) und im Planetendifferential (4) eine Synchronisierung im Sinne der Herbeiführung gleicher Winkelgeschwindigkeiten der Komponenten bewirkt, wobei diese Synchronität den Schaltpunkt (S2-3) markiert, in dem die Kupplung (K5) geschlossen wird - Kupplungen (K2, K4) bleiben zu, (K1, K3) bleiben offen -, demzufolge im anschließenden dritten mechanischen Gang (3.M) das Planetendifferential (4) verblockt ist und nach neutralisierender Einstellung der Hydromaschinen (H1, H2) auf α ₘᵢₙ die Drehzahl des Motors (1) wieder auf Maximum gehen kann.

8. Antriebseinrichtung nach den Ansprüchen 1 bis 7, dadurch gekennzeichnet, daß der Übergang vom dritten in den vierten mechanischen Gang (4.M) im Lastschalt-Viergang-Betrieb des Leistungsverzweigungsgetriebes (2) bei einem Drehzahlverhältnis n₂/n₁ = 1 erfolgt durch Öffnen der Kupplung (K5) - Kupplungen (K2, K4) bleiben zu, (K1, K3) bleiben offen - und kurzzeitiges Verstellen der Hydromaschine (H1) in Richtung α ₘₐₓ und Hydromaschine (H2) voll auf α ₘₐₓ, was wiederum einen Drehzahleinschnitt im Antriebsmotor (1) bewirkt, worauf bei Erreichen des Umschaltpunktes (S 3-4) für den rein mechanischen Betrieb im vierten mechanischen Gang (4.M) die Leitungen (5, 6) umsteuerblockseitig wieder abgesperrt sowie die Hydromaschine (H1) neutralisiert mit α ₘᵢₙ und Hydromaschine (H2) in Richtung α ₘₐₓ verstellt als Pumpe betrieben werden, was ein Erhöhen der Drehzahl des Motors (1) in Richtung Maximum und Erreichen der Maximalgeschwindigkeit des Fahrzeugs am Ende dieses Overdrive-Bereiches bei einem Drehzahlverhältnis n₂/n₁ = ca. 1,3 ermöglicht.

9. Antriebseinrichtung nach den Ansprüchen 1 bis 4, dadurch gekennzeichnet, das das Leistungsverzweigungsgetriebe (2) in fünf aufeinanderfolgenden hydromechanischen Bereichen betreibbar ist, in drei normalen, einem Overdrive-Bereich und einem Extrem-Overdrivebereich, wobei der erste Bereich bei n₂/n₁ ≦ ca. 0,5, der zweite Bereich bei n₂/n₁ = ca. 0,5 ≦ ca. 0,8, der dritte Bereich bei n₂/n₁ = ca. 0,8 ≦ ca. 1, der Overdrive-Bereich bei n₂/n₁ = ca. 1 ≦ ca. 1,5 und der Extrem-Overdrivebereich bei n₂/n₁ = ca. 1,5 ≦ ca. 4 gegeben ist.

10. Antriebseinrichtung nach Anspruch 9, dadurch gekennzeichnet, daß im ersten hydromechanischen Bereich (1.HM) folgende Verhältnisse im Leistungsverzweigungsgetriebe (2) gegeben sind:
a) Hydromaschine (H1) wirkt rückwärts drehend als Pumpe und Hydromaschine (H2) wirkt vorwärts drehend als Motor, Drehzahlverläufe n_{H1}, n_{H2} (Diagramme in Fig. 3);
b) Kupplungen (K1, K3) geschlossen, (K2, K4, K5) offen, siehe Fig. 3, daher Hydromaschine (H1) mit Hohlrad (18), Hydromaschine (H2) über Steg (14) mit abtriebseitiger Hauptwelle (10) verbunden;
c) Druckverläufe ΔP_{H1}, ΔP_{H2} und Schwenkwinkeleinstellungen α _{H1}, α _{H2} (Diagramme in Fig. 3);
d) Einstellung Umsteuerblock (U) (Fig. 3), daher beide Leitungen (5, 6) auf parallelen Durchlaß geschaltet;
e) hydrostatischer Leistungsanteil N_{H} von H₁ und H₂ (Diagramm in Fig. 3).

11. Antriebseinrichtung nach den Ansprüchen 9 und 10, dadurch gekennzeichnet, daß die Umschaltung der Hydromaschine (H2) für einen Übergang in den zweiten hydromechanischen Bereich (2.HM) bei Nullfördermenge und Synchrondrehzahl bei stillstehendem Hohlrad (18) durch Öffnen der Kupplung (K1) und Schließen der Kupplung (K2) erfolgt und anschließend im zweiten hydromechanischen Bereich (2.HM) folgende Verhältnisse im Leistungsverzweigungsgetriebe (2) gegeben sind:
a) Hydromaschine (H1) wirkt vorwärts drehend als Motor und Hydromaschine (H2) wirkt vorwärts drehend als Pumpe, Drehzahlverläufe n_{H1}, n_{H2} (Diagramm in Fig. 3);
b) Kupplungen (K2, K3) geschlossen, Kupplungen (K1, K4, K5) offen, (Fig. 3) - daher Hydromaschine (H1) mit Hohlrad (18) und Hydromaschine (H2) mit kleinem Sonnenrad 13 verbunden;
c) Druckverläufe ΔP_{H1}, ΔP_{H2} und Schwenkwinkeleinstellungen α _{H1}, α H₂ (Diagramm in Fig. 3);
d) Einstellung Umsteuerblock (U) (Fig. 3), daher beide Leitungen (5, 6) kreuzweise auf Durchlaß geschaltet;
e) hydrostatischer Leistungsanteil N_{H} von H₁ und H₂ (Diagramm in Fig. 3).

12. Antriebseinrichtung nach Anspruch 11, dadurch gekennzeichnet, daß die Umschaltung der Hydromaschine (H1) von ihrer vorherigen, im ersten (1.HM) und zweiten hydromechanischen Bereich (2.HM) gegebenen Verbindung mit dem Hohlrad (18) auf die Verbindung mit der eingangsseitigen Hauptwelle (9) beim Übergang vom zweiten in den dritten hydromechanischen Bereich (3.HM) in voll auf α ₘₐₓ ausgeschwenktem Zustand, bei getriebeseitiger Synchrondrehzahl und ohne Wechsel zwischen Druck- und Saugseiten bei gleichzeitig voll ausgeschwenkter Hydromaschine (H2) durch Öffnen der Kupplung (K3) und Schließen der Kupplung (K4) erfolgt und anschließend im dritten hydromechanischen Bereich (3.HM) folgende Verhältnisse innerhalb des Leistungsverzweigungsgetriebes (2) gegeben sind:
a) Hydromaschine (H1) wirkt vorwärts drehend als Motor und Hydromaschine (H2) wirkt vorwärts drehend als Pumpe, Drehzahlverhältnisse n_{H1}, n_{H2} (Diagramme in Fig. 3);
b) Kupplungen (K2, K4) geschlossen, Kupplungen (K1, K3, K5) offen, (Fig. 3) - daher Hydromaschine (H1) mit eingangsseitger Hauptwelle (9) und Hydromaschine (H2) mit kleinem Sonnenrad 13 verbunden;
c) Druckverläufe ΔP_{H1}, ΔP_{H2} und Schwenkwinkeleinstellungen α _{H1}, α H₂ siehe Diagramme (Fig. 3);
d) Einstellung Umsteuerblock (U) (Fig. 3), daher beide Leitungen (5, 6) kreuzweise auf Durchlaß geschaltet;
e) hydrostatischer Leistungsanteil N_{H} von H₁ und H₂ (Diagramm in Fig. 3).

13. Antriebseinrichtung nach Anspruch 9, dadurch gekennzeichnet, daß im vierten hydromechanischen Bereich (4.HM) folgende Verhältnisse im Leistungsverzweigungsgetriebe (2) gegeben sind:
a) Hydrostatmaschine (H1) wirkt vorwärts drehend als Motor und Hydromaschine (H2) wirkt vorwärts drehend als Pumpe, Drehzahlverhältnisse n_{H1}, n_{H2} (Diagramme in Fig. 3);
b) Kupplungen (K2, K4) geschlossen, (K1, K3, K5) offen, (Fig. 3), daher Hydromaschine (H1) mit eingangsseitiger Hauptwelle (9) und Hydromaschine (H2) mit kleinem Sonnenrad (13) verbunden;
c) Druckverläufe ΔP_{H1}, ΔP_{H2} und Schwenkwinkeleinstellungen α _{H1},α _{H2} (Diagramme in Fig. 3);
d) Einstellung Umsteuerblock (U) (Fig. 3), daher beide Leitungen (5, 6) kreuzweise auf Durchlaß geschaltet;
e) hydrostatischer Leistungsanteil N_{H} von _{H1} und _{H2} (Diagramm in Fig. 3).

14. Antriebseinrichtung nach Anspruch 9, dadurch gekennzeichnet, daß im fünften hydromechanischen Bereich (5.HM) folgende Verhältnisse im Leistungsverzweigungsgetriebe (2) gegeben sind:
a) Hydromaschine (H1) wirkt vorwärts drehend als Pumpe und Hydromaschine (H2) wirkt rückwärts drehend als Motor, Drehzahlverhältnisse n_{H1}, n_{H2} (Diagramme in Fig. 3);
b) Kupplungen (K2, K4) geschlossen, (K1, K3, K5) offen, (Fig. 3), daher Hydromaschine (H1) mit eingangsseitiger Hauptwelle (9) und Hydromaschine (H2) mit kleinem Sonnenrad (13) verbunden;
c) Druckverläufe ΔP_{H1}, ΔP_{H2} und Schwenkwinkeleinstellungen α _{H1}, α _{H2} (Diagramme in Fig. 3);
d) Einstellung Umsteuerblock (U) (Fig. 3), daher beide Leitungen (5, 6) parallel auf Durchlaß geschaltet;
e) hydrostatischer Leistungsabfall N_{H} von H1 und H2 (Diagramm in Fig. 3).

15. Antriebseinrichtung nach den Ansprüchen 1 bis 3, dadurch gekennzeichnet, daß für Rückwärtsfahrt in hydromechanischem Betrieb des Leistungsverzweigungsgetriebe (2) folgende Verhältnisse in diesem gegeben sind:
a) Hydromaschine (H1) wirkt als Pumpe und Hydromaschine (H2) wirkt rückwärts drehend als Motor, Drehzahlverhältnisse n_{H1}, n_{H2} (Diagramm in Fig. 3);
b) Kupplungen (K1) und (K3) oder wahlweise zu dieser (K4) geschlossen, Kupplungen (K2, K5) und (K4) oder wahlweise zu dieser (K3) offen, (Fig. 3), daher Hydromaschine (H1) entweder rückwärts drehend mit Hohlrad (18) oder wahlweise mit eingangsseitiger Hauptwelle (9) und Hydromaschine (H2) über Steg (14) mit ausgangsseitiger Hauptwelle (10) verbunden;
c) Druckvorläufe ΔP_{H1}, ΔP_{H2} und Schwenkwinkeleinstellungen α _{H1}, α _{H2} (Diagramme in Fig. 3);
d) Einstellung Umsteuerblock (U) (Fig. 3), daher beide Leitungen 5, 6 kreuzweise auf Durchlaß geschaltet;
e) hydrostatischer Leistungsanteil N_{H} von H1 und H2 (Diagramm in Fig. 3),
wobei, wenn für Rückwärtsfahrt die Philosophie des Schaukelns durch stufenlosen Übergang zwischen Vorwärts- und Rückwärtsfahrt ohne definierten Fahrzeugstillstand gewählt wird, für Rückwärtsfahrt die gleiche Anschlußkonfiguration für die Hydromaschinen (H1, H2), nämlich Kupplungen (K1, K3) geschlossen, (K2, K4, K5) offen, (H1) am Hohlrad (18), (H2) über Steg (14) an ausgangsseitiger Hauptwelle (10) angeschlossen, wie zuletzt bei Vorwärtsfahrt erhalten bleibt, jedoch zur Erhöhung des Rückwärtsabtriebsmomentes beim Übergang von Vorwärts- in Rückwärtsfahrt die Kupplung (K3) zu öffnen und die Kupplung (K4) zu schließen ist, verbunden mit einer Drehrichtungsumkehr der Hydromaschinen (H1, H2) und entsprechender Umschaltung des Umsteuerblockes (U) sowie einem kurzzeitigen Fahrzeugstillstand.

16. Antriebseinrichtung nach den Ansprüchen 1 bis 4, gekennzeichnet, durch Vorsehen einer zusätzlichen Reibkupplung (K6) beispielsweise in Verbindung mit der zweiten Nebenwelle (33), mit welcher Reibkupplung (K6) durch Befehle von der Steuereinrichtung (8) her ein Notfahr-Betrieb des Fahrzeugs bei Ausfall der Hochdruckhydraulik möglich ist.

17. Antriebseinrichtung nach Anspruch 16, dadurch gekennzeichnet, daß durch die Kupplung (K6) und gegebenenfalls eine zusätzliche Lamellenkupplung (K7) durch schleifende Einstellung von der Steuereinrichtung (8) her eine Lastsynchronisierung im Moment der Umschaltung der Hydromaschinen (H1, H2) auf andere Getriebeteile bewirkbar ist und deshalb die Kupplungen (K1, K2, K3, K4) anstelle durch Synchron-Klauenschaltkupplungen durch einfachere Klauenkupplungen realisierbar sind.

18. Antriebseinrichtung nach einem der Ansprüche 1 bis 15, dadurch gekennzeichnet, daß zur Erhöhung der Beschleunigung eine Kickdown-Funktion, welche der Steuereinrichtung (8) durch vollständiges Niedertreten des Fahrpedals (46) von einem entsprechenden Sensor signalisiert wird, eingeleitet wird und dann zumindest der erste mechanische Gang (1.M) ausgeschaltet wird durch bei Vollastbetrieb des Antriebsmotors (1) erfolgenden Durchfahren des erstn hydromechanischen Betriebsbereiches (1.HM) unter Inkaufnahme hydrostatischer Geräusche.

## Claims

1. Drive means of a vehicle, having a hydrostatic-mechanical power branching transmission system (2) which is provided between drive motor (1) and axle drive train (11) and which has an at least four-shaft planet differential (4) having at least two rows of planet gears (15, 16), two sun gears (12, 13), a carrier (14) and a hollow wheel (18), this power branching transmission system (2) also having two main shafts (9, 10), which form the input and output respectively and are each connected to different shafts of the planet differential (4), and at least two hydraulic machines (H1, H2) which operate alternately as motor or pump and which can each be connected in different ranges of operation to a shaft of the planet differential (4) by an appropriate switching of a plurality of clutches (K1, K2, K3, K4), characterized in that the power branching transmission system (2) enables both continuously variable hydromechanical power transmission up to an extreme overdrive range where n₂/n₁ = 0 to approximately 4 between both main shafts (9, 10) as well as load-switching four-speed operation, effected by means of a first hydromechanical start-up range and a last hydromechanical extreme overdrive range and interposed mechanical gear operation with switch points stepped such that on short sudden drops in engine speed at least the majority of a vehicle acceleration procedure can be covered purely mechanically, the second mechanical gear (2.M) being created by simultaneous mechanical connection of a hydraulic machine (H1) to two of the shafts of the planet differential (4), the penultimate mechanical gear (3.M), effected by switching a clutch (K5), being a direct drive and the last mechanical stage (4.M) being effected by hydrostatic locking of a sun gear (13) by means of a hydraulic machine (H2) pivoted to its full extent.

2. Drive means according to Claim 1, characterized in that the power branching transmission system (2) in particular also has the following gear parts, namely
- a gear train (28, 27, 17, 14) between hydraulic machine (H2) and main shaft (10) on the output side, which can be closed and interrupted by means of the switchable clutch (K1),
- a gear train (23, 21, 20) between hydraulic machine (H2) and the smaller (13) of the two sun gears (12, 13), which can be closed and interrupted by means of the switchable clutch (K2),
- a gear train (34, 32) between hydraulic machine (H1) and hollow wheel (18), which can be closed and interrupted by means of a switchable clutch (K3),
- a gear train (39, 38) between hydraulic machine (H1) and main shaft (9) on the input side, which can be closed and interrupted by means of the switchable clutch (K4),
and in that blocking of the planet differential (4) can be achieved by means of the switchable clutch (K5).

3. Drive means according to Claims 1 and 2, characterized in that the power branching transmission system (2) has a first auxiliary shaft (22) connected to the hydraulic machine (H2) and a second auxiliary shaft (33) connected to the hydraulic machine (H1), the parts (29, 30, 31) of a first clutch (K1), by means of which the hydraulic machine (H2) can be connected to the main shaft (10) on the output side by way of a gear train (28, 27) and the carrier (14), and the parts (24, 25, 26) of a second clutch (K2), to which the hydraulic machine (H2) can be connected to the smaller (13) of the two sun gears (12, 13) by way of a gear train (23, 21), being arranged on the first auxiliary shaft (22), and the parts (35, 36, 37) of a third clutch (K3), by means of which the hydraulic machine (H1) can be connected to the hollow wheel (18) by way of a toothed wheel (34), and the parts (40, 41, 42) of a fourth clutch (K4), by means of which the hydraulic machine (H1) can be connected to the main shaft (9) on the input side by way of a gear train (39, 38), being arranged on the second auxiliary shaft (33), and in that the parts (43, 44, 45) of a fifth clutch (K5), by means of which the hollow wheel (18) can be connected to the main shaft (10) on the output side for the purpose of blocking the planet differential gear mechanism (4), are arranged on the main shaft (10) on the output side.

4. Drive means according to Claim 1, characterized in that the two hydraulic machines (H1, H2) are connected to one another by means of their connections by way of two hydraulic lines (5, 6) which can be switched to parallel or crosswise flow by means of a reversing block (U), can be completely blocked or short-circuited and are connected to controllable pressure limitation valve (D) by way of at least one line (7).

5. Drive means according to one of Claims 1 to 4, characterized in that the first mechanical gear (1.M) in the load-switching four-speed operation of the power branching transmission system (2) is effective in the following conditions, namely the clutches (K2, K4, K5) are open, the clutches (K1, K3) are closed, the connection lines (5, 6) are blocked, consequently the hollow wheel (18) is connected to the hydraulic machine (H1) which is pivoted to its full extent at αₘₐₓ and which acts as a pump and the main shaft (10) on the output side is connected by way of the carrier (14) to the neutralized hydraulic machine (H2) which rotates at αₘᵢₙ pivot angle, the switching point (S1-2) for transition to the second mechanical gear (2.M) being achieved with increasing speed of the motor (1) in the range n₂/n₁ approx. 0.2 ≦ approx. 0.5.

6. Drive means according to Claims 1 to 5, characterized in that the second mechanical gear (2.M) in the load-switching four-speed operation of the power branching transmission system (2) is achieved in the following conditions, namely the clutch (K1) is opened, clutch (K2) is closed, the clutch (K3) is closed, (K4 and K5) remains open, further the lines (5, 6) are switched on the reversing block side from originally parallel via fully blocked to crosswise flow and the hydraulic machine (H2) which is now connected to the small sun gear (13) is briefly pivoted to its full extent at αₘₐₓ, which causes a sudden drop in speed in the drive motor (1) and synchronous speed in the planet differential (4) to give equal peripheral speeds of the components and then the second mechanical gear (2.M) is effected by an additional closing of the clutch (K4) - clutches (K2, K3) still remain closed, (K1, K5) still remain open - as a result of which the hydraulic machine (H1) is then also connected to the main shaft (9) on the input side and the speed of the drive motor (1) can increase to the maximum again, whilst flow losses are prevented by a neutralizing adjustment of the hydraulic machines (H1, H2) to αₘᵢₙ and a short-circuiting of the two lines (5, 6) on the reversing block side.

7. Drive means according to Claims 1 to 6, characterized in that the transition from the second into the third mechanical gear (3.M) in the load-switching four-speed operation of the power branching transmission system is effected approximately at a speed ratio of n₂/n₁ = approx. 0.7 by opening the clutch (K3) - the remaining clutches (K1, K2, K4, K5) remain in the existing switching position - simultaneously and briefly the hydraulic machine (H1) is pivoted in the direction αₘₐₓ and the hydraulic machine (H2) is pivoted to its full extent to αₘₐₓ, which again causes a sudden drop in speed in the drive motor (1) and causes a synchronization in the planet differential (4) to create equal angular speeds of the components, this synchronism marking the switching point (S2-3) at which the clutch (K5) is closed - clutches (K2, K4) remain closed, (K1, K3) remain open - consequently in the subsequent third mechanical gear (3.M) the planet differential (4) is blocked and after neutralizing adjustment of the hydraulic machines (H1, H2) to αₘᵢₙ the speed of the motor (1) can go to the maximum again.

8. Drive means according to Claims 1 to 7, characterized in that the transition from the third to the fourth mechanical gear (4.M) in the load-switching four-speed operation of the power branching transmission system (2) is effected at a speed ratio of n₂/n₁ = 1 by opening the clutch (K5) - clutches (K2, K4) remain closed, (K1, K3) remain open - and briefly displacing the hydraulic machine (H1) in the direction αₘₐₓ and hydraulic machine (H2) fully to αₘₐₓ, which in turn causes a sudden drop in speed in the drive motor (1), whereupon on reaching the switching point (S 3-4) for the purely mechanical operation in the fourth mechanical gear (4.M) the lines (5, 6) are blocked again on the reversing block side and the hydraulic machine (H1), neutralized at αₘᵢₙ, and hydraulic machine (H2) displaced in the direction of αₘₐₓ are operated as a pump, which enables the speed of the motor (1) to be increased in the direction of the maximum and the maximum speed of the vehicle at the end of this overdrive range to be reached with a speed ratio of n₂/n₁ = approx. 1.3.

9. Drive means according to Claims 1 to 4, characterized in that the power branching transmission system (2) can be operated in five successive hydromechanical ranges, in three normal, one overdrive range and one extreme overdrive range, the first range being in the region of n₂/n₁ ≦ approx. 0.5, the second range being in the region of n₂/n₁ = approx. 0.5 ≦ approx. 0.8, the third range being in the region of n₂/n₁ = approx. 0.8 ≦ approx. 1, the overdrive range being in the region of n₂/n₁ = approx. 1 ≦ approx. 1.5 and the extreme overdrive range being in the region of n₂/n₁ = approx. 1.5 ≦ approx. 4.

10. Drive means according to Claim 9, characterized in that in the first hydromechanical range (1.HM) the following conditions are present in the power branching transmission system (2):
a) hydraulic machine (H1), rotating backwards, acts as a pump and hydraulic machine (H2), rotating forwards, acts as a motor, speed profiles n_{H1}, n_{H2} (graphs in Fig. 3);
b) clutches (K1, K3) closed, (K2, K4, K5) open, see Fig. 3, thus hydraulic machine (H1) connected to hollow wheel (18), hydraulic machine (H2) connected by way of carrier (14) to main shaft (10) on output side;
c) pressure profiles ΔP_{H1}, ΔP_{H2} and pivot angle settings α_{H1}, α_{H2} (graphs in Fig. 3);
d) adjustment of reversing block (U) (Fig. 3), thus both lines (5, 6) switched to parallel flow;
e) hydrostatic output quantity N_{H} of H₁ and H₂ (graph in Fig. 3).

11. Drive means according to Claims 9 and 10, characterized in that the switching over of the hydraulic machine (H2) for a transition to the second hydromechanical range (2.HM) with zero conveying quantity and synchronous speed with stationary hollow wheel (18) is effected by opening the clutch (K1) and closing the clutch (K2) and then in the second hydromechanical range (2.HM) the following conditions are present in the power branching transmission system (2):
a) hydraulic machine (H1), rotating forwards, acts as a motor and hydraulic machine (H2), rotating forwards, acts as a pump, speed profiles n_{H1}, n_{H2} (graph in Fig. 3);
b) clutches (K2, K3) closed, clutches (K1, K4, K5) open, (Fig. 3) - thus hydraulic machine (H1) connected to hollow wheel (18) and hydraulic machine (H2) connected to small sun gear 13;
c) pressure profiles ΔP_{H1}, ΔP_{H2} and pivot angle settings α_{H1}, α_{H2} (graph in Fig. 3);
d) adjustment of reversing block (U) (Fig. 3), thus both lines (5, 6) switched to crosswise flow;
e) hydrostatic output quantity N_{H} of H₁ and H₂ (graph in Fig. 3).

12. Drive means according to Claim 11, characterized in that the switching over of the hydraulic machine (H1) from its previous connection to the hollow wheel (18), present in the first (1.HM) and second hydromechanical range (2.HM), to the connection to the main shaft (9) on the input side during the transition from the second to the third hydromechanical range (3.HM) is effected in the state pivoted to its full extent at αₘₐₓ, with synchronous speed on the transmission system-side and without changing between pressure and suction sides at the same time with hydraulic machine (H2) pivoted to its full extent by opening the clutch (K3) and closing the clutch (K4) and then in the third hydromechanical range (3.HM) the following conditions are present within the power branching transmission system (2);
a) hydraulic machine (H1), rotating forwards, acts as a motor and hydraulic machine (H2), rotating forwards, acts as a pump, speed ratios n_{H1}, n_{H2} (graphs in Fig. 3);
b) clutches (K2, K4) closed, clutches (K1, K3, K5) open, (Fig. 3) - thus hydraulic machine (H1) connected to main shaft (9) on the input side and hydraulic machine (H2) connected to small sun gear 13;
c) pressure profiles ΔP_{H1}, ΔP_{H2} and pivot angle settings α_{H1}, α_{H2}, see graphs (Fig. 3);
d) adjustment of reversing block (U) (Fig. 3), thus both lines (5, 6) switched to crosswise flow;
e) hydrostatic output quantity N_{H} of H₁ and H₂ (graph in Fig. 3).

13. Drive means according to Claim 9, characterized in that in the fourth hydromechanical range (4.HM) the following conditions are present in the power branching transmission system (2):
a) hydrostatic machine (H1), rotating forwards, acts as a motor and hydraulic machine (H2), rotating backwards, acts as a pump, speed ratios n_{H1}, n_{H2} (graphs in Fig. 3);
b) clutches (K2, K4) closed, (K1, K3, K5) open, (Fig. 3), thus hydraulic machine (H1) connected to main shaft (9) on the input side and hydraulic machine (H2) connected to small sun gear (13);
c) pressure profiles ΔP_{H1}, ΔP_{H2} and pivot angle settings α_{H1}, α_{H2} (graphs in Fig. 3);
d) adjustment of reversing block (U) (Fig. 3), thus both lines (5, 6) switched to crosswise flow;
e) hydrostatic output quantity N_{H} of H₁ and H₂ (graph in Fig. 3).

14. Drive means according to Claim 9, characterized in that in the fifth hydromechanical range (5.HM) the following conditions are present in the power branching transmission system (2):
a) hydraulic machine (H1), rotating forwards, acts as a pump and hydraulic machine (H2), rotating backwards, acts as a motor, speed ratios n_{H1}, n_{H2} (graphs in Fig. 3);
b) clutches (K2, K4) closed, (K1, K3, K5) open, (Fig. 3), thus hydromachine (H1) connected to main shaft (9) on the input side and hydromachine (H2) connected to small sun gear (13);
c) pressure profiles ΔP_{H1}, ΔP_{H2} and pivot angle settings α_{H1}, α_{H2} (graphs in Fig. 3);
d) adjustment of reversing block (U) (Fig. 3), thus both lines (5, 6) switched to parallel flow;
e) hydrostatic fall in output N_{H} of H₁ and H₂ (graph in Fig. 3).

15. Drive means according to Claims 1 to 3, characterized in that for reverse travel in hydromechanical operation of the power branching transmission system (2) the following conditions are present therein:
a) hydraulic machine (H1) acts as a pump and hydraulic machine (H2), rotating backwards, acts as a motor, speed ratios n_{H1}, n_{H2} (graph in Fig. 3);
b) clutches (K1) and (K3), or alternatively to this (K4), closed, clutches (K2, K5) and (K4), or alternatively to this (K3), open, (Fig. 3), thus hydraulic machine (H1), is either connected, rotating backwards, to hollow wheel (18) or alternatively to main shaft (9) on the input side and hydraulic machine (H2) is connected by way of carrier (14) to main shaft (10) on the output side;
c) pressure profiles ΔP_{H1}, ΔP_{H}₂ and pivot angle settings α_{H1}, α_{H2} (graphs in Fig. 3);
d) adjustment of reversing block (U) (Fig. 3), thus both lines 5, 6 switched to crosswise flow;
e) hydrostatic output quantity N_{H} of H₁ and H₂ (graph in Fig. 3),
if for reverse travel the philosophy of rocking as a result of continuously variable transition between forward and reverse travel without defined vehicle stoppage is chosen, for reverse travel the same connection configuration for the hydraulic machines (H1, H2), namely clutches (K1, K3) closed, (K2, K4, K5) open, (H1) being connected to the hollow wheel (18), (H2) being connected by way of carrier (14) to main shaft (10) on the output side, as is maintained as above in forward travel, but to increase the reverse output moment during the transition from forward to reverse travel the clutch (K3) is to be opened and the clutch (K4) is to be closed, in conjunction with a reversal in the direction of rotation of the hydraulic machines (H1, H2) and corresponding switching over of the reversing block (U) and a brief vehicle stoppage.

16. Drive means according to Claims 1 to 4, characterized by the provision of an additional friction clutch (K6), connected for example to the second auxiliary shaft (33), by means of which friction clutch (K6) an emergency driving operation of the vehicle in the event of failure of the high-pressure hydraulic system is possible by means of commands from the control means (8).

17. Drive means according to Claim 16, characterized in that as a result of the clutch (K6) and where appropriate an additional multiplate clutch (K7) a load synchronization at the moment of switching over of the hydraulic machines (H1, H2) to other transmission parts can be effected by a slipping adjustment by the control means (8) and therefore the clutches (K1, K2, K3, K4) instead of being realized by synchronous engagement dog clutches can be realized by simpler dog clutches.

18. Drive means according to one of Claims 1 to 15, characterized in that to increase the acceleration a kick-down function, which is signalled by an appropriate sensor to the control means (8) by fully depressing the driving pedal (46), is introduced and then at least the first mechanical gear (1.M) is disengaged by running through the first hydromechanical operating range (1.HM), while accepting hydrostatic noise, at full load operation of the drive motor (1).

## Revendications

1. Dispositif d'entraînement d'un véhicule, avec, entre le moteur d'entraînement (1) et la ligne d'entraînement de l'essieu (11), un mécanisme hydrostatique-mécanique de branchement de la puissance (2), qui comporte un différentiel planétaire (4) à au moins quatre arbres avec au moins deux rangées de roues planétaires (15, 16), deux roues solaires (12, 13), un support de roues planétaires (14) et une roue à denture intérieure (18), en outre, deux arbres principaux (9, 10) constituant l'entrée ou la sortie et respectivement raccordés à différents arbres du différentiel planétaire (4), et au moins deux machines hydrauliques (H1, H2) qui fonctionnent alternativement comme moteur ou comme pompe et qui sont respectivement susceptibles d'être raccordées dans différentes zones de fonctionnement par commutation appropriée de plusieurs dispositifs d'accouplement ou coupleurs (K1, K2, K3, K4) à un arbre du différentiel planétaire (4), dispositif d'entraînement caractérisé en ce que le mécanisme de branchement de la puissance (2) permet aussi bien une transmission hydro-mécanique continue d'énergie jusqu'à une zone extrême de surmultiplication avec n₂/n₁ = 0 jusqu'à environ 4 entre les deux arbres principaux (9, 10) qu'également en fonctionnement en boîte de vitesses à quatre rapports de vitesse, réalisé par une première zone hydro-mécanique de démarrage et une dernière zone hydro-mécanique d'extrême surmultiplication, et avec intercalation d'un fonctionnement en mécanique en boîte de vitesses avec des changements de vitesses échelonnés de façon qu'avec des coupures de courte durée de la vitesse de rotation du moteur, tout au moins la majeure partie d'un processus d'accélération du véhicule soit couverte de façon purement mécanique, tandis que le second passage mécanique de vitesses (2.M) a lieu grâce à une liaison mécanique simultanée d'une machine hydraulique (H1) avec deux des arbres des différentiels planétaires (4), l'avant passage mécanique de vitesse (3.M) par commutation d'un coupleur (K5) est une prise directe et le dernier échelon mécanique (4.M) est provoqué par le maintien hydrostatique d'une roue solaire (13) au moyen d'une machine hydraulique (H2) ayant complètement pivoté.

2. Dispositif d'entraînement selon la revendication 1, caractérisé en ce que le mécanisme de branchement de la puissance (2) comporte encore en détail les parties suivantes, à savoir :
- un train d'engrenages (28, 27, 17, 14) susceptible d'être fermé et d'être interrompu au moyen du coupleur commutable (K1) entre la machine hydraulique (H2) et l'arbre principal côté sortie (10),
- un train d'engrenages (23, 21, 20) susceptible d'être fermé et d'être interrompu au moyen du coupleur commutable (K2) entre la machine hydraulique (H2) et la plus petite (13) des deux roues solaires (12, 13),
- un train d'engrenages (34, 32) susceptible d'être fermé et d'être interrompu entre la machine hydraulique (H1) et la roue à denture intérieure (18),
- un train d'engrenages (39, 38) susceptible d'être fermé et d'être interrompu au moyen du coupleur commutable (K4) entre la machine hydraulique (H1) et l'arbre principal côté entrée (9),
- et en ce que, au moyen du coupleur commutable (K5) un blocage des différentiels planétaires (4) est susceptible d'être obtenu.

3. Dispositif d'entraînement selon les revendications 1 et 2, caractérisé en ce que le mécanisme de branchement de la puissance (2) comporte un premier arbre secondaire (22) relié à la machine hydraulique (H2) et un second arbre secondaire (33) relié à la machine hydraulique (H1), tandis que sur le premier arbre secondaire (22) sont disposées les parties (29, 30, 31) d'un premier coupleur (K1) par lequel la machine hydraulique (H2) est susceptible d'être reliée par l'intermédiaire d'un train d'engrenages (28, 27) et du support des roues planétaires (14) à l'arbre principal côté sortie (10), et les parties (24, 25, 26) d'un second coupleur (K2) par lequel la machine hydraulique (H2) est susceptible d'être reliée par l'intermédiaire d'un train d'engrenages (23, 21) à la plus petite (13) des deux roues solaires (12, 13), tandis que sur le second arbre secondaire (33) sont disposées les parties (35, 36, 37) d'un troisième coupleur (K3) par lequel la machine hydraulique (H1) est susceptible d'être reliée par l'intermédiaire d'une roue dentée (34) avec la roue à denture intérieure (18), ainsi que les parties (40, 41, 42) d'un quatrième coupleur (K4) par lequel la machine hydraulique (H1) est susceptible d'être reliée par l'intermédiaire d'un train d'engrenages (39, 38) avec l'arbre principal côté entrée (9), et en ce que sur l'arbre principal côté sortie (10) sont disposées les parties (43, 44, 45) d'un cinquième coupleur (K5), par lequel la roue à denture intérieure (18) est susceptible d'être reliée à l'arbre principal côté sortie (10) pour bloquer le mécanisme différentiel planétaire (4).

4. Dispositif d'entraînement selon la revendication 1, caractérisé en ce que les deux machines hydrauliques (H1, H2) avec leur raccordement, sont reliées ensemble par l'intermédiaire de deux canalisations hydrauliques (5, 6), qui par l'intermédiaire d'un bloc d'inversion (U) sont susceptibles d'être commutées sur un passage en parallèle ou en croix, d'être complètement fermées ou bien d'être court-circuitées, tandis que par l'intermédiaire d'au moins une canalisation (7), elles sont reliées à une soupape de limitation de la pression (D) susceptible d'être commandée.

5. Dispositif d'entraînement selon l'une quelconque des revendications 1 à 4, caractérisé en ce que le premier passage mécanique de vitesse (1.M) dans le fonctionnement en boîte de vitesses à quatre rapports de vitesses du mécanisme de branchement de la puissance (2) a lieu dans les conditions suivantes, à savoir que les coupleurs (K2, K4, K5) sont ouverts, les coupleurs (K1, K3) sont fermés, les canalisations de liaison (5, 6) sont fermées, et qu'en conséquence, la roue à denture intérieure (18) est reliée à la machine hydraulique (H1) agissant en tant que pompe et ayant pivoté sur αₘₐₓ, et l'arbre principal côté sortie (10) est relié par l'intermédiaire du support des roues planétaires (14) à la machine hydraulique (H2) neutralisée tournant avec un angle de pivotement αₘᵢₙ, tandis que lorsque la vitesse de rotation du moteur (1) croît, dans la zone n₂/n₁ environ 0, 2 ≦ à environ 0,5, le point de commutation (S1 - 2) pour aborder le second passage mécanique de vitesse (2.M) est atteint.

6. Dispositif d'entraînement selon l'une quelconque des revendications 1 à 5, caractérisé en ce que le second passage mécanique de vitesse (2.M) dans le fonctionnement en boîte de vitesses à quatre rapports de vitesses du mécanisme de branchement de la puissance (2) est obtenu dans les conditions suivantes, à savoir que le coupleur (K1) est ouvert, le coupleur (K2) est fermé, le coupleur (K3) est fermé, (K4 et K5) restent ouverts, en outre, les canalisations (5, 6) côté bloc d'inversion sont commutées du passage initialement en parallèle au passage en croix par l'intermédiaire de la fermeture complète et la machine hydraulique (H2) alors reliée à la petite roue solaire (13) est basculée pendant un court instant complètement sur αₘₐₓ, ce qui provoque une coupure de vitesse de rotation sur le moteur d'entraînement (1) et une vitesse de rotation synchrone sur le différentiel planétaire (4) dans le sens de vitesses périphériques identiques des composants, et ensuite le second passage mécanique de vitesse (2.M) est provoqué par une fermeture supplémentaire du coupleur (K4) - les coupleurs (K2, K3) restent en outre, fermés, (K1, K5) restent en outre, ouverts - grâce à quoi la machine hydraulique (H1) est alors également reliée à l'arbre principal côté entrée (9) et la vitesse de rotation du moteur d'entraînement (1) peut à nouveau monter jusqu'au maximum, tandis que pendant ce temps, du fait du réglage neutralisant des machines hydrauliques (H1, H2) sur αₘᵢₙ et le court-circuit des deux canalisations (5, 6) côté bloc d'inversion, des pertes d'écoulement sont évitées.

7. Dispositif d'entraînement selon l'une quelconque des revendications 1 à 6, caractérisé en ce que la transition du second au troisième passage mécanique de vitesse (3.M) dans le fonctionnement en boîte de vitesses à quatre rapports de vitesses du mécanisme de branchement de la puissance (2), s'effectue à peu près pour un rapport de vitesse de rotation n₂/n₁ = environ 0,7 par ouverture du coupleur (K3) - les autres coupleurs (K1, K2, K4, K5) restant dans la position de commutation donnée -, simultanément la machine hydraulique (H1) est basculée dans le sens αₘₐₓ et la machine hydraulique (H2) est complètement basculée sur αₘₐₓ ce qui provoque à nouveau une coupure de la vitesse de rotation sur le moteur d'entraînement (1) et sur le différentiel planétaire (4) une synchronisation dans le sens tendant à provoquer des vitesses angulaires identiques des composants, ce synchronisme marquant le point de commutation (S2 - 3) auquel le coupleur (K5) est fermé - les coupleurs (K2, K4) restant fermés, (K1, K3) restant ouverts -, en conséquence de quoi, dans le troisième passage mécanique de vitesse (3.M) venant ensuite, le différentiel planétaire (4) est bloqué et après le réglage neutralisant des machines hydrauliques (H1, H2) sur αₘᵢₙ, la vitesse de rotation du moteur (1) peut à nouveau aller au maximum.

8. Dispositif d'entraînement selon l'une quelconque des revendications 1 à 7, caractérisé en ce que la transition du troisième au quatrième passage de vitesse mécanique (4.M), d'un fonctionnement en boîte de vitesses à quatre rapports de vitesses du mécanisme de branchement de la puissance (2), s'effectue pour un rapport de vitesse de rotation n₂/n₁ = 1 par ouverture du coupleur (K5) - les coupleurs (K2, K4) restant fermés, (K1, K3) restant ouverts-, et un réglage de courte durée de la machine hydraulique (H1) dans le sens αₘₐₓ et de la machine hydraulique (H2) complètement sur αₘₐₓ, ce qui provoque à nouveau une coupure de vitesse de rotation sur le moteur d'entraînement (1), sur quoi, lorsque le point de commutation (S3 - 4) est atteint, pour le fonctionnement purement mécanique dans le quatrième passage mécanique de vitesse (4.M), les canalisations (5, 6) sont à nouveau fermées côté bloc d'inversion et la machine hydraulique (H1) est neutralisée avec αₘᵢₙ et la machine hydraulique (H2) réglée dans le sens αₘₐₓ sont exploitées en tant que pompes, ce qui permet une augmentation de la vitesse de rotation du moteur (1) dans le sens maximum et l'obtention de la vitesse maximale du véhicule à la fin de cette zone de surmultiplication pour un rapport de vitesse de rotation n₂/n₁ = environ 1,3.

9. Dispositif d'entraînement selon l'une quelconque des revendications 1 à 4, caractérisé en ce que le mécanisme de branchement de la puissance (2) est susceptible d'être exploité dans cinq zones hydromécaniques successives, dont trois normales, dans une zone de surmultiplication et dans une zone de surmultiplication extrême, la première zone correspondant à n₂/n₁ ≦ à environ 0,5, la seconde zone à n₂/n₁ = environ 0,5 ≦ à environ 0,8, la troisième zone à n₂/n₁ = à environ 0,8 ≦ à environ 1, la zone de surmultiplication à n₂/n₁ = environ 1 ≦ à environ 1,5 et la zone d'extrême surmultiplication à n₂/n₁ = environ 1,5 ≦ à environ 4.

10. Dispositif d'entraînement selon la revendication 9, caractérisé en ce que dans la première zone hydromécanique (1.HM) on a les rapports suivants dans le mécanisme de branchement de la puissance (2)
a) la machine hydraulique (H1) agit en tant que pompe en tournant en arrière et la machine hydraulique (H2) agit en tant que moteur en tournant vers l'avant, évolutions de la vitesses de rotation n_{H1}, n_{H2} (diagramme sur la figure 3),
b) les coupleurs (K1, K3) sont fermés, (K2, K4, K5) sont ouverts (voir figure 3) en conséquence, la machine hydraulique (H1) est reliée à la roue à denture intérieure (18), la machine hydraulique (H2) est reliée par l'intermédiaire du support des roues planétaires (14) avec l'arbre principal côté sortie (10),
c) évolutions de la pression ΔP_{H1}, ΔP_{H2} et réglages de l'angle de pivotement α_{H1}, α_{H2} (diagramme sur la figure 3),
d) réglages du bloc d'inversion (U) ( figure 3), en conséquence les deux canalisations (5, 6) sont branchées sur passage en parallèle,
e) quote-part de puissance hydrostatique N_{H} de H₁ et H₂ (diagramme sur la figure 3).

11. Dispositif d'entraînement selon l'une quelconque des revendications 9 et 10 caractérisé en ce que la commutation de la machine hydraulique (H2) pour le passage dans la seconde zone hydromécanique (2.HM) pour une quantité refoulée nulle et une vitesse synchrone, la roue à denture intérieure (18) étant à l'arrêt, s'effectue par ouverture du coupleur (K1) et fermeture du coupleur (K2) et ensuite, dans la deuxième zone hydromécanique (2.HM) on a les rapports suivants dans le mécanisme de branchement de la puissance (2) :
a) la machine hydraulique (H1) agit en tant que moteur en tournant vers l'avant et la machine hydraulique (H2) agit en tant que pompe en tournant vers l'arrière, évolutions des vitesses de rotation n_{H1}, n_{H2} (diagramme sur la figure 3),
b) coupleurs (K2, K3) fermés, coupleurs (K1, K4, K5) ouverts, ( figure 3) - en conséquence, la machine hydraulique (H1) est reliée à la roue à denture intérieure (18) et la machine hydraulique (H2) est reliée avec la petite roue solaire (13),
c) évolutions de ΔP_{H1}, ΔP_{H2} et réglages de l'angle de pivotement α_{H1}, α_{H2} (diagramme sur la figure 3),
d) réglages du bloc d'inversion (U) ( figure 3), en conséquence les deux canalisations (5, 6) sont branchées sur le passage en croix,
e) quote-part de puissance hydrostatique N_{H} de H₁ et H₂ (diagramme sur la figure 3).

12. Dispositif d'entraînement selon la revendication 11, caractérisé en ce que la commutation de la machine (H1) de sa liaison préalable, donnée dans la première zone (1.HM) et la seconde zone (2.HM) hydromécaniques avec la roue à denture intérieure (18) à la liaison avec l'arbre principal (9) du côté entrée, lors du passage de la deuxième à la troisième zone hydromécanique (3.HM) se réalise à l'état complètement pivoté αₘₐₓ, avec une vitesse de rotation synchrone du côté entraînement et sans changement **e**ntre côté pression et côté aspiration avec la machine hydraulique (H2) en même temps complètement pivotée par ouverture du coupleur (K3) et fermeture du coupleur (K4) et ensuite dans la troisième zone hydromécanique (3.HM) les conditions suivantes sont réalisées à l'intérieur du mécanisme de branchement de la puissance (2).
a) la machine hydraulique (H1) agit en tournant en avant en tant que moteur et la machine hydraulique (H2) agit en tournant en avant en tant que pompe, condition de vitesse de rotation n_{H1}, n_{H2} (diagramme à la figure 3),
b) les coupleurs (K2, K4) sont fermés, coupleurs K1, K3, K5) sont ouverts, (figure 3), donc la machine hydraulique (H1) est reliée à l'arbre principale (9) côté entrée et la machine hydraulique (H2) est reliée à la petite roue solaire (13),
c) évolutions de la pression ΔP_{H1}, ΔP_{H2} et réglages de l'angle de pivotement α_{H1}, α_{H2} voir diagramme (figure 3),
d) réglage du bloc d'inversion (U) (figure 3) en conséquence les deux canalisations (5, 6) sont branchées sur passage en croix,
e) quote-part de puissance hydrostatique N_{H} de H₁ et H₂ (diagramme à la figure 3).

13. Dispositif d'entraînement selon la revendication 9, caractérisé en ce que dans la quatrième zone hydromécanique (4.HM) on a les rapports suivants dans le mécanisme de branchement de la puissance (2) :
a) la machine hydraulique (H1) agit en tant que moteur en tournant en avant et la machine hydraulique (H2) agit en tant que pompe en tournant en avant, rapports de vitesse de rotation n_{H1}, n_{H2} (diagramme à la figure 3),
b) les coupleurs (K2, K4) sont fermés, (K1, K3, K5) sont ouverts (figure 3) en conséquence la machine hydraulique (H1) est reliée avec l'arbre principal (9) côté entrée et la machine hydraulique (H2) est reliée avec la petite roue solaire (13),
c) les évolutions de la pression ΔP_{H1}, ΔP_{H2} et les réglages de pivotement α_{H1}, α_{H2} (diagramme à la figure 3),
d) le réglage du bloc d'inversion (U) (figure 3), en conséquence les deux canalisations (5, 6) sont branchées sur passage en croix,
e) la quote-part de puissance hydrostatique N_{H} de _{H1} et _{H2} (diagramme à la figure 3).

14. Dispositif d'entraînement selon la revendication caractérisé en ce que dans la cinquième zone hydromécanique (5.HM) on a les rapports suivants dans le mécanisme de branchement de la puissance (2) :
a) la machine hydraulique (H1) agit comme pompe en tournant vers l'avant et la machine hydraulique (H2) agit comme moteur en tournant vers l'arrière, rapport de vitesse de rotation n_{H1}, n_{H2} (diagramme sur la figure 3),
b) coupleurs (K2, K4) fermés, (K1, K3, K5) ouverts ( figure 3), en conséquence, la machine hydraulique (H1) est reliée à l'arbre principal côté entrée (9) et la machine hydraulique (H2) est reliée à la petite roue solaire (13),
c) évolutions de la pression ΔP_{H1}, ΔP_{H2} et réglages de l'angle de pivotement α_{H1}, α_{H2} (diagramme sur la figure 3),
d) réglages du bloc d'inversion (U) (figure 3) en conséquence, les deux canalisations (5, 6) sont branchées sur le passage en parallèle,
e) chute hydrostatique de puissance N_{H} de H₁ et H₂ (diagramme sur la figure 3).

15. Dispositif d'entraînement selon l'une quelconque des revendications 1 à 3, caractérisé en ce que pour la marche arrière dans le fonctionnement hydromécanique du mécanisme de branchement de la puissance (2), on a dans celui-ci les rapports suivants :
a) la machine hydraulique (H1) agit en tant que pompe et la machine hydraulique (H2) agit en tant que moteur en tournant en arrière, rapport de vitesse de rotation n_{H1}, n_{H2} (diagramme sur la figure 3),
b) les coupleurs (K1) et (K3) ou bien éventuellement en plus de ceux-ci (K4) sont fermés, les coupleurs (K2, K5) et (K4) ou bien éventuellement en plus de ceux-ci (K3) sont ouverts ( figure 3) , en conséquence la machine hydraulique (H1) est soit reliée à la roue à denture intérieure (18) en tournant en arrière, ou bien elle est éventuellement reliée à l'arbre principal côté entrée (9) et la machine hydraulique (H2) est reliée par l'intermédiaire du support des roues planétaires (14) à l'arbre principal côté sortie (10),
c) évolutions de la pression ΔP_{H1}, ΔP_{H2} et réglages de l'angle de pivotement α_{H1}, α_{H2} (diagramme sur la figure 3),
d) réglages du bloc d'inversion (U) ( figure 3), en conséquence les deux canalisations (5, 6) sont branchées sur le passage en croix,
e) quote-part de puissance hydrostatique M_{H} de H₁ et H₂ (diagramme sur la figure 3)
si pour la marche en arrière, la philosophie du basculement par transition continue, entre la marche en avant et la marche en arrière sans arrêt défini du véhicule est choisie, pour la marche en arrière, la même configuration de raccordement pour les machines hydrauliques (H1, H2) à savoir les coupleurs (K1, K3) fermés, (K2, K4, K5) ouverts, (H1) raccordé à la roue à denture intérieure (18), (H2) raccordé par l'intermédiaire du support de roues planétaires (14) à l'arbre principal côté sortie (10), restent maintenus comme en dernier lieu pour la marche en avant, toutefois pour augmenter le couple de sortie en arrière lors du passage de la marche en avant à la marche en arrière, le coupleur (K3) doit être ouvert et le coupleur (K4) doit être fermé, combinés avec une inversion du sens de rotation des machines hydrauliques (H1, H2) et une commutation correspondante du bloc d'inversion (U) ainsi qu'avec un arrêt de courte durée du véhicule.

16. Dispositif d'entraînement selon l'une quelconque des revendications 1 à 4, caractérisé en ce qu'il est prévu un coupleur à friction (K6) supplémentaire, par exemple en combinaison avec le second arbre secondaire (33), coupleur à friction (K6) avec lequel, grâce à des ordres lui parvenant du dispositif de commande (8), une exploitation en marche de secours du véhicule est possible en cas de défaillance de l'hydraulique haute pression.

17. Dispositif d'entraînement selon la revendication 16, caractérisé en ce que grâce au coupleur (K6) et, éventuellement, un coupleur à lamelles supplémentaire (K7), par réglage en patinage à partir du dispositif de commande (8), une synchronisation de charge est susceptible d'être provoquée au moment de la commutation des machines hydrauliques (H1, H2) sur d'autres parties du mécanisme, et en conséquence, les coupleurs (K1, K2, K3, K4) au lieu d'être réalisés sous la forme d'embrayages à griffes synchrones, peuvent être réalisés sous la forme de simples accouplements à griffes.

18. Dispositif d'entraînement selon l'une quelconque des revendications 1 à 15, caractérisé en ce que pour augmenter l'accélération, une fonction de rétrogradation forcée est déclenchée, qui est signalée au dispositif de commande (8) à partir d'un détecteur approprié en enfonçant complètement la pédale d'accélérateur (46), et alors, tout au moins le premier passage mécanique de vitesse (1.M) est mis hors circuit du fait de la traversée, résultant du fonctionnement à pleine charge du moteur d'entraînement (1), de la première zone hydromécanique de fonctionnement (1.HM) en s'accommodant des bruits hydrostatiques.
